# EUROPEAN PATENT APPLICATION

(11) **EP 4 797 554 A1**
(43) Date of publication of application: **26.08.2026**
(21) Application number: 25736238.4
(22) Date of filing: 02.01.2025
(51) Int. Cl.: H04B 7/0452, H04W 72/044, H04W 72/51, H04W 72/542, H04W 72/543, H04B 17/318, H04W 64/00, H04W 24/02

(54) **METHOD AND DEVICE FOR VISIBLE REGION ALLOCATION IN COMMUNICATION SYSTEM HAVING XL-MIMO ANTENNAS**

(30) Priority: 05.01.2024 KR 20240002280
(71) Applicant: Hyundai Motor Company, Seoul 06797 (KR); Kia Corporation, Seoul 06797 (KR); Seoul National University R&DB Foundation, Seoul 08826 (KR)
(72) Inventor: LEE, Jeong Su, Hwaseong-si, Gyeonggi-do 18280 (KR); HONG, Ui Hyun, Hwaseong-si, Gyeonggi-do 18280 (KR); SUH, Young Kil, Hwaseong-si, Gyeonggi-do 18280 (KR); HAHN, Gene Back, Hwaseong-si, Gyeonggi-do 18280 (KR); KIM, Dong Hwi, Seoul 08826 (KR); KWON, Jeonghyeon, Seoul 08826 (KR); CHOI, Wan, Seoul 08826 (KR)
(74) Representative: Isarpatent
(86) International application number: PCT/KR2025/000013
(87) International publication number: WO 2025/147083

(57) **Abstract**

This method of a base station for allocating a visible region (VR) in a communication system having a plurality of antennas may comprise the steps of: acquiring location information of a second UE making an initial access; selecting, from among UEs communicating with the base station, a first UE, which is closest to the second UE; transmitting a first RS to the second UE through a first VR allocated to the first UE from among XL-MIMO antennas; receiving, from the second UE, a first report message including a measurement value for the first RS measured by the second UE; and allocating the first VR to the second UE if it is determined, on the basis of the first report message, that the second UE can use the first VR, and the first UE and the second UE can share the first VR through a multiplexing method.

## Description

### [Technical Field]

The present disclosure relates to an enhanced communication technique, and more particularly, to an extra-large scale massive multiple input multiple output (XL-MIMO) technique.

### [Background Art]

A communication network (e.g. 5G communication network or 6G communication network) is being developed to provide enhanced communication services compared to the existing communication networks (e.g. long term evolution (LTE), LTE-Advanced (LTE-A), etc.). The 5G communication network (e.g. New Radio (NR) communication network) can support frequency bands both below 6GHz and above 6GHz. In other words, the 5G communication network can support both a frequency region 1 (FR1) and/or FR2 bands. Compared to the LTE communication network, the 5G communication network can support various communication services and scenarios. For example, usage scenarios of the 5G communication network may include enhanced Mobile BroadBand (eMBB), Ultra Reliable Low Latency Communication (URLLC), massive Machine Type Communication (mMTC), and the like.

The 6G communication network can support a variety of communication services and scenarios compared to the 5G communication network. The 6G communication network can meet the requirements of hyper-performance, hyper-bandwidth, hyper-space, hyper-precision, hyper-intelligence, and/or hyper-reliability. The 6G communication network can support diverse and wide frequency bands and can be applied to various usage scenarios such as terrestrial communication, non-terrestrial communication, sidelink communication, and the like.

Meanwhile, a 5G communication system uses a massive multiple input multiple output (MIMO) system in order to simultaneously serve a plurality of terminals and achieve a higher data rate. In a future 6G communication system, in order to secure a spatial dimension that cannot be provided by the current massive MIMO system, a configuration in which a larger number of antennas are arranged on a wide wall surface of a building is being considered. Such an antenna system in which a larger number of antennas are arranged on a wide surface than the massive MIMO system is defined as an extra-large scale massive MIMO (XL-MIMO) system.

In such an XL-MIMO system, a procedure for allocating an optimal antenna region to a terminal is required.

### [Disclosure]

### [Technical Problem]

The present disclosure is directed to providing a method and an apparatus for allocating an optimal antenna region to a terminal in an XL-MIMO system.

### [Technical Solution]

A method of a base station, according to an exemplary embodiment of the present disclosure for achieving the above-described objective, may comprise: acquiring location information of a second user equipment (UE) performing initial access; selecting a first UE closest to the second UE among UEs in communication with the base station; transmitting, to the second UE, a first reference signal (RS) via a first visibility region (VR) allocated to the first UE among a plurality of antennas; receiving, from the second UE, a first report message including a measurement value for the first RS measured by the second UE; and based on the first report message, determining that the second UE is able to use the first VR and that the first UE and the second UE are able to share the first VR through a multiplexing scheme, and allocating the first VR to the second UE.

The multiplexing scheme may be one of time division multiplexing, frequency division multiplexing, or code division multiplexing.

Based on a reference signal received power (RSRP) value of the first RS measured by the second UE being equal to or greater than a preset threshold, the second UE may be determined to be able to use the first VR.

The method may further comprise: based on the first UE and the second UE not being able to share the first VR through a multiplexing scheme, dividing the first VR into a first-1 VR and a first-2 VR based on a first quality of service (QoS) requirement of the first UE and a second QoS requirement of the second UE; allocating the first-1 VR to the first UE; and allocating the first-2 VR to the second UE.

Each of the first QoS requirement and the second QoS requirement may include at least one of a priority level, a packet delay budget, a packet error rate, a maximum data burst volume, or a data rate requirement.

The base station may obtain the first QoS requirement and the second QoS requirement from a core network.

The base station may obtain the first QoS requirement from the first UE, and may obtain the second QoS requirement from the second UE.

The method may further comprise: transmitting, to the first UE, a second RS via the first-1 VR; receiving, from the first UE, a second report message including a measurement value for the second RS measured by the first UE; checking, based on the second report message, whether the first-1 VR satisfies the first QoS requirement of the first UE; and based on the first-1 VR satisfying the first QoS requirement of the first UE, determining the first-1 VR as a VR of the first UE.

The method may further comprise: based on the first-1 VR not satisfying the first QoS requirement of the first UE, requesting information on VR candidates of the first UE; selecting, based on the VR candidates of the first UE, a second VR to be added to the first-1 VR; transmitting, to the first UE, a third RS via the first-1 VR and the second VR; receiving, from the first UE, a third report message including a measurement value for the third RS measured by the first UE; and based on the measurement value for the third RS included in the third report message satisfying the first QoS requirement of the first UE, determining the first-1 VR and the second VR as a VR of the first UE.

The method may further comprise: transmitting, to the second UE, a fourth RS via the first-2 VR; receiving, from the second UE, a fourth report message including a measurement value for the fourth RS measured by the second UE; checking, based on the measurement value for the fourth RS included in the fourth report message, whether the first-2 VR satisfies the second QoS requirement of the second UE; and based on the first-2 VR satisfying the second QoS requirement of the second UE, determining the first-2 VR as a VR of the second UE.

The method may further comprise: based on the first-2 VR not satisfying the second QoS requirement of the second UE, determining a first antenna region, among antennas adjacent to the first-2 VR, that is not allocated to another UE; selecting a first antenna group including a preset number of antennas among antennas in the first antenna region; transmitting, to the second UE, a fifth RS through antennas included in the first-2 VR and antennas of the first antenna group; receiving, from the second UE, a fifth report message including a measurement value for the fifth RS measured by the second UE; and based on the measurement value for the fifth RS included in the fifth report message satisfying the second QoS requirement of the second UE, determining the first-2 VR and the first antenna group as a VR of the second UE.

A base station, according to an exemplary embodiment of the present disclosure for achieving the above-described objective, may comprise at least one processor, and the at least one processor may cause the base station to:

acquire location information of a second user equipment (UE) performing initial access; select a first UE closest to the second UE among UEs in communication with the base station; transmit, to the second UE, a first reference signal (RS) via a first visibility region (VR) allocated to the first UE among a plurality of antennas; receive, from the second UE, a first report message including a measurement value for the first RS measured by the second UE; and based on the first report message, determine that the second UE is able to use the first VR and that the first UE and the second UE are able to share the first VR through a multiplexing scheme, and allocate the first VR to the second UE.

The multiplexing scheme may be one of time division multiplexing, frequency division multiplexing, or code division multiplexing.

Based on a reference signal received power (RSRP) value of the first RS measured by the second UE being equal to or greater than a preset threshold, the second UE may be determined to be able to use the first VR.

The at least one processor may further cause the base station to:
based on the first UE and the second UE not being able to share the first VR through a multiplexing scheme, divide the first VR into a first-1 VR and a first-2 VR based on a first quality of service (QoS) requirement of the first UE and a second QoS requirement of the second UE; allocate the first-1 VR to the first UE; and allocate the first-2 VR to the second UE.

A method of a terminal, according to an exemplary embodiment of the present disclosure for achieving the above-described objective, may comprise: transmitting location related information of the second UE to a base station during initial access to the base station; receiving a measurement report control message including configuration information of a first reference signal (RS) and report configuration information; receiving the first RS from the base station via a first visibility region (VR) allocated to a first UE; measuring a first reference signal received power (RSRP) for the first RS; transmitting, to the base station, a first report message including the measured first RSRP; and based on receiving first VR allocation information from the base station, transmitting and receiving signals with the base station based on the first VR allocation information.

Based on the first VR allocation information indicating the first VR, the first VR allocation information may include information indicating a multiplexing scheme for sharing the first VR between the first UE and the second UE.

The multiplexing scheme may be one of time division multiplexing, frequency division multiplexing, or code division multiplexing.

The method may further comprise: based on the first VR allocation information indicating a first-2 VR different from the first VR, receiving, from the base station, a second RS via the first-2 VR; measuring a second RSRP for the second RS; transmitting, to the base station, a second report message including the measured second RSRP; and receiving second VR allocation information from the base station.

The method may further comprise: based on the second VR allocation information indicating allocation of additional antennas to the first-2 VR, receiving a third RS from the base station; measuring a third RSRP for the third RS; transmitting, to the base station, a third report message including the measured third RSRP; and receiving third VR allocation information from the base station.

### [Advantageous Effects]

According to the present disclosure, in a base station using an XL-MIMO antenna, an appropriate VR can be quickly allocated to an initial access UE by allowing the initial access UE to share a VR allocated to an existing UE in communication. When the VR allocated to the existing UE in communication cannot be shared with the initial access UE, a VR allocation time can be reduced by dividing and allocating the VR of the existing UE in communication. In addition, when communication performance of at least one of the initial access UE and the UE in communication is degraded due to VR division, additional antennas can be effectively added to the divided VR. Accordingly, there is an advantage in that degradation of communication performance can be prevented.

### [Description of Drawings]

FIG. 1 is a conceptual diagram illustrating a first exemplary embodiment of a communication system.
FIG. 2 is a block diagram illustrating a first exemplary embodiment of a communication node constituting a communication system.
FIG. 3 is a block diagram illustrating a first exemplary embodiment of communication nodes performing communication.
FIG. 4A is a block diagram illustrating a first exemplary embodiment of a transmission path.
FIG. 4B is a block diagram illustrating a first exemplary embodiment of a reception path.
FIG. 5 is a conceptual diagram illustrating a first exemplary embodiment of a system frame in a communication system.
FIG. 6 is a conceptual diagram illustrating a first exemplary embodiment of a subframe in a communication system.
FIG. 7 is a conceptual diagram illustrating a first exemplary embodiment of a slot in a communication system.
FIG. 8 is a conceptual diagram illustrating a first exemplary embodiment of a time-frequency resource in a communication system.
FIG. 9 is a conceptual diagram illustrating a case in which a UE communicating with a base station having an XL-MIMO antenna system and a newly entering UE are present.
FIG. 10A is a sequence diagram illustrating reporting of location information to a base station when a new UE performs an initial access procedure to the base station having an XL-MIMO antenna system.
FIG. 10B is a sequence diagram illustrating a case in which a new UE transmits a reference signal in a random access procedure to a base station having an XL-MIMO antenna system.
FIG. 10C is a sequence diagram illustrating a case in which a new UE provides UE location information to a base station after establishing an RRC connection establishment with the base station having an XL-MIMO antenna system.
FIG. 11 is a sequence diagram illustrating a procedure in which a base station having an XL-MIMO antenna system searches for a VR based on a capability of a new UE.
FIG. 12 is a conceptual diagram illustrating a case in which a base station having an XL-MIMO antenna system divides a VR between a UE in communication and a new UE.
FIG. 13 is a sequence diagram illustrating an operation in which a base station having an XL-MIMO antenna system receives QoS requirements from UEs.
FIG. 14 is a sequence diagram illustrating an operation in which a base station having an XL-MIMO antenna system divides VR #3 among UEs.
FIG. 15 is a conceptual diagram illustrating a case in which a base station having an XL-MIMO antenna system expands a VR of a UE in communication.
FIG. 16 is a conceptual diagram illustrating a case in which a base station having an XL-MIMO antenna system expands a VR of a new UE.
FIG. 17A is a sequence diagram illustrating an operation in which a base station having an XL-MIMO antenna system additionally allocates a VR to UE #3.
FIG. 17B is a sequence diagram illustrating an operation in which a base station having an XL-MIMO antenna system additionally allocates a VR to UE #k.
FIG. 18 is a sequence diagram illustrating selection, division, and/or additional allocation of a VR in a base station having an XL-MIMO antenna system and UEs.

### [Best mode of the Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

In the present disclosure, '(re)transmission' may refer to 'transmission', 'retransmission', or 'transmission and retransmission', '(re)configuration' may refer to 'configuration', 'reconfiguration', or 'configuration and reconfiguration', '(re)connection' may refer to 'connection', 'reconnection', or 'connection and reconnection', and '(re)access' may refer to 'access', 're-access', or 'access and re-access'.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, exemplary embodiments of the present disclosure will be described in detail with reference to the accompanying drawings. In describing the disclosure, to facilitate the entire understanding of the disclosure, like numbers refer to like elements throughout the description of the figures and the repetitive description thereof will be omitted. The operations according to the exemplary embodiments described explicitly in the present disclosure, as well as combinations of the exemplary embodiments, extensions of the exemplary embodiments, and/or variations of the exemplary embodiments, may be performed. Some operations may be omitted, and a sequence of operations may be altered.

Even when a method (e.g. transmission or reception of a signal) to be performed at a first communication node among communication nodes is described in exemplary embodiments, a corresponding second communication node may perform a method (e.g. reception or transmission of the signal) corresponding to the method performed at the first communication node. That is, when an operation of a user equipment (UE) is described, a base station corresponding thereto may perform an operation corresponding to the operation of the UE. Conversely, when an operation of a base station is described, a corresponding UE may perform an operation corresponding to the operation of the base station.

The base station may be referred to by various terms such as NodeB, evolved NodeB, next generation node B (gNodeB), gNB, device, apparatus, node, communication node, base transceiver station (BTS), radio remote head (RRH), transmission reception point (TRP), radio unit (RU), road side unit (RSU), radio transceiver, access point, access node, and the like. The user equipment (UE) may be referred to by various terms such as terminal, device, apparatus, node, communication node, end node, access terminal, mobile terminal, station, subscriber station, mobile station, portable subscriber station, on-board unit (OBU), and the like.

In the present disclosure, signaling may be one or a combination of two or more of higher-layer signaling, MAC signaling, and physical (PHY) signaling. A message used for higher-layer signaling may be referred to as a 'higher layer message' or 'higher-layer signaling message'. A message used for MAC signaling may be referred to as a 'MAC message' or 'MAC signaling message'. A message used for PHY signaling may be referred to as a 'PHY message' or 'PHY signaling message'. The higher-layer signaling may refer to an operation of transmitting and receiving system information (e.g. master information block (MIB), system information block (SIB)) and/or an RRC message. The MAC signaling may refer to an operation of transmitting and receiving a MAC control element (CE). The PHY signaling may refer to an operation of transmitting and receiving control information (e.g. downlink control information (DCI), uplink control information (UCI), or sidelink control information (SCI)).

In the present disclosure, 'configuration of an operation (e.g. transmission operation)' may refer to signaling of configuration information (e.g. information elements, parameters) required for the operation and/or information indicating to perform the operation. 'configuration of information elements (e.g. parameters)' may refer to signaling of the information elements. In the present disclosure, 'signal and/or channel' may refer to signal, channel, or both signal and channel, and 'signal' may be used to mean 'signal and/or channel'.

A communication network to which exemplary embodiments are applied is not limited to that described below, and the exemplary embodiments may be applied to various communication networks (e.g. 4G communication networks, 5G communication networks, and/or 6G communication networks). Here, 'communication network' may be used interchangeably with a term 'communication system'.

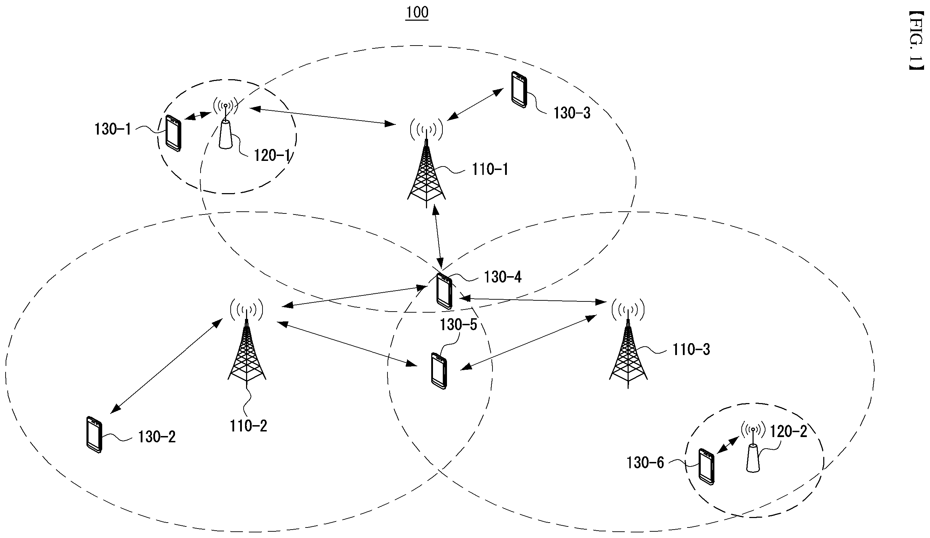

FIG. 1 is a conceptual diagram illustrating a first exemplary embodiment of a communication system.

As shown in FIG. 1, a communication system 100 may comprise a plurality of communication nodes 110-1, 110-2, 110-3, 120-1, 120-2, 130-1, 130-2, 130-3, 130-4, 130-5, and 130-6. In addition, the communication system 100 may further include a core network (e.g. a serving gateway (S-GW), a packet data network (PDN) gateway (P-GW), a mobility management entity (MME). When the communication system 100 is a 5G communication (e.g. NR system), the core network may include an access and mobility management function (AMF), a user plane function (UPF), a session management function (SMF), and the like.

The plurality of communication nodes 110 to 130 may support communication protocols (e.g. LTE communication protocol, LTE-A communication protocol, NR communication protocol, etc.) specified in 3^{rd} generation partnership project (3GPP) standards. The plurality of communication nodes 110 to 130 may support a code division multiple access (CDMA) technique, a wideband CDMA (WCDMA) technique, a time division multiple access (TDMA) technique, a frequency division multiple access (FDMA) technique, an orthogonal frequency division multiplexing (OFDM) technique, a filtered OFDM technique, a cyclic prefix OFDM (CP-OFDM) technique, a discrete Fourier transform spread OFDM (DFT-s-OFDM) technique, an orthogonal frequency division multiple access (OFDMA) technique, a single carrier FDMA (SC-FDMA) technique, a non-orthogonal multiple access (NOMA) technique, a generalized frequency division multiplexing (GFDM) technique, a filter bank multi-carrier (FBMC) technique, a universal filtered multi-carrier (UFMC) technique, a space division multiple access (SDMA) technique, or the like. Each of the plurality of communication node may have the following structure.

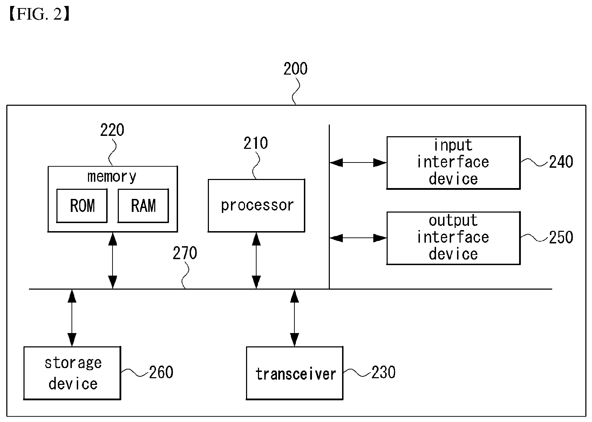

FIG. 2 is a block diagram illustrating a first exemplary embodiment of a communication node constituting a communication system.

As shown in FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. Each component included in the communication node 200 may communicate with each other as connected through a bus 270.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a non-volatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. The communication system 100 including the base stations 110-1, 110-2, 110-3, 120-1, and 120-2 and the terminals 130-1, 130-2, 130-3, 130-4, 130-5, and 130-6 may be referred to as an 'access network'. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to cell coverage of the first base station 110-1. Also, the second terminal 130-2, the fourth terminal 130-4, and the fifth terminal 130-5 may belong to cell coverage of the second base station 110-2. Also, the fifth base station 120-2, the fourth terminal 130-4, the fifth terminal 130-5, and the sixth terminal 130-6 may belong to cell coverage of the third base station 110-3. Also, the first terminal 130-1 may belong to cell coverage of the fourth base station 120-1, and the sixth terminal 130-6 may belong to cell coverage of the fifth base station 120-2.

Here, each of the plurality of base stations 110-1, 110-2, 110-3, 120-1, and 120-2 may refer to a Node-B, evolved Node-B (eNB), gNB, advanced base station (ABS), high reliability-base station (HR-BS), base transceiver station (BTS), radio base station, radio transceiver, access point, access node, radio access station (RAS), mobile multihop relay-base station (MMR-BS), relay station (RS), advanced relay station (ARS), high reliability-relay station (HR-RS), home NodeB (HNB), home eNodeB (HeNB), road side unit (RSU), radio remote head (RRH), transmission point (TP), transmission and reception point (TRP), or the like.

Each of the plurality of terminals 130-1, 130-2, 130-3, 130-4, 130-5, and 130-6 may refer to a user equipment (UE), terminal equipment (TE), advanced mobile station (AMS), high reliability-mobile station (HR-MS), terminal, access terminal, mobile terminal, station, subscriber station, mobile station, portable subscriber station, node, device, on-board unit (OBU), or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul or a non-ideal backhaul, and exchange information with each other via the ideal or non-ideal backhaul. Also, each of the plurality of base stations 110-1, 110-2, 110-3, 120-1, and 120-2 may be connected to the core network through the ideal or non-ideal backhaul. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support multi-input multi-output (MIMO) transmission (e.g. a single-user MIMO (SU-MIMO), multi-user MIMO (MU-MIMO), massive MIMO, or the like), coordinated multipoint (CoMP) transmission, carrier aggregation (CA) transmission, transmission in an unlicensed band, sidelink communication (e.g. device-to-device (D2D) communication, proximity services (ProSe)), Internet of Things (IoT) communication, dual connectivity (DC), and/or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2, and operations supported by the plurality of base stations 110-1, 110-2, 110-3, 120-1, and 120-2. For example, the second base station 110-2 may transmit a signal to the fourth terminal 130-4 in the SU-MIMO manner, and the fourth terminal 130-4 may receive the signal from the second base station 110-2 in the SU-MIMO manner. Alternatively, the second base station 110-2 may transmit a signal to the fourth terminal 130-4 and fifth terminal 130-5 in the MU-MIMO manner, and the fourth terminal 130-4 and fifth terminal 130-5 may receive the signal from the second base station 110-2 in the MU-MIMO manner.

The first base station 110-1, the second base station 110-2, and the third base station 110-3 may transmit a signal to the fourth terminal 130-4 in the CoMP transmission manner, and the fourth terminal 130-4 may receive the signal from the first base station 110-1, the second base station 110-2, and the third base station 110-3 in the CoMP manner. Also, each of the plurality of base stations 110-1, 110-2, 110-3, 120-1, and 120-2 may exchange signals with the corresponding terminals 130-1, 130-2, 130-3, 130-4, 130-5, or 130-6 which belongs to its cell coverage in the CA manner. Each of the base stations 110-1, 110-2, and 110-3 may control sidelink communications between the fourth terminal 130-4 and the fifth terminal 130-5, and thus the fourth terminal 130-4 and the fifth terminal 130-5 may perform the sidelink communications under control of the second base station 110-2 and the third base station 110-3, respectively.

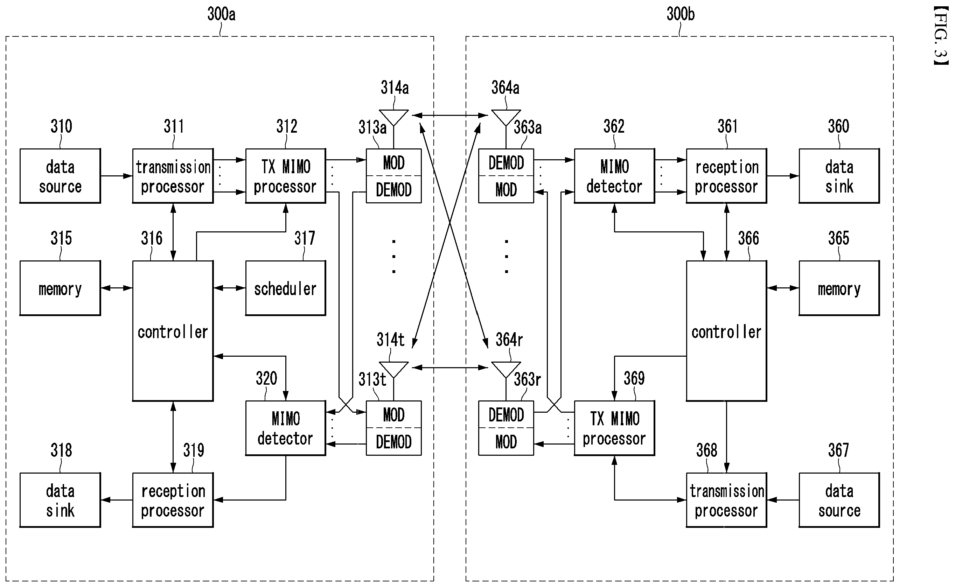

Meanwhile, communication nodes that perform communications in the communication network may be configured as follows. A communication node shown in FIG. 3 may be a specific exemplary embodiment of the communication node shown in FIG. 2.

FIG. 3 is a block diagram illustrating a first exemplary embodiment of communication nodes performing communication.

As shown in FIG. 3, each of a first communication node 300a and a second communication node 300b may be a base station or UE. The first communication node 300a may transmit a signal to the second communication node 300b. A transmission processor 311 included in the first communication node 300a may receive data (e.g. data unit) from a data source 310. The transmission processor 311 may receive control information from a controller 316. The control information may include at least one of system information, RRC configuration information (e.g. information configured by RRC signaling), MAC control information (e.g. MAC CE), or PHY control information (e.g. DCI, SCI).

The transmission processor 311 may generate data symbol(s) by performing processing operations (e.g. encoding operation, symbol mapping operation, etc.) on the data. The transmission processor 311 may generate control symbol(s) by performing processing operations (e.g. encoding operation, symbol mapping operation, etc.) on the control information. In addition, the transmission processor 311 may generate synchronization/reference symbol(s) for synchronization signals and/or reference signals.

A Tx MIMO processor 312 may perform spatial processing operations (e.g. precoding operations) on the data symbol(s), control symbol(s), and/or synchronization/reference symbol(s). An output (e.g. symbol stream) of the Tx MIMO processor 312 may be provided to modulators (MODs) included in transceivers 313a to 313t. The modulator may generate modulation symbols by performing processing operations on the symbol stream, and may generate signals by performing additional processing operations (e.g. analog conversion operations, amplification operation, filtering operation, up-conversion operation, etc.) on the modulation symbols. The signals generated by the modulators of the transceivers 313a to 313t may be transmitted through antennas 314a to 314t.

The signals transmitted by the first communication node 300a may be received at antennas 364a to 364r of the second communication node 300b. The signals received at the antennas 364a to 364r may be provided to demodulators (DEMODs) included in transceivers 363a to 363r. The demodulator (DEMOD) may obtain samples by performing processing operations (e.g. filtering operation, amplification operation, down-conversion operation, digital conversion operation, etc.) on the signals. The demodulator may perform additional processing operations on the samples to obtain symbols. A MIMO detector 362 may perform MIMO detection operations on the symbols. A reception processor 361 may perform processing operations (e.g. de-interleaving operation, decoding operation, etc.) on the symbols. An output of the reception processor 361 may be provided to a data sink 360 and a controller 366. For example, the data may be provided to the data sink 360 and the control information may be provided to the controller 366.

On the other hand, the second communication node 300b may transmit signals to the first communication node 300a. A transmission processor 368 included in the second communication node 300b may receive data (e.g. data unit) from a data source 367 and perform processing operations on the data to generate data symbol(s). The transmission processor 368 may receive control information from the controller 366 and perform processing operations on the control information to generate control symbol(s). In addition, the transmission processor 368 may generate reference symbol(s) by performing processing operations on reference signals.

A Tx MIMO processor 369 may perform spatial processing operations (e.g. precoding operations) on the data symbol(s), control symbol(s), and/or reference symbol(s). An output (e.g. symbol stream) of the Tx MIMO processor 369 may be provided to modulators (MODs) included in the transceivers 363a to 363t. The modulator may generate modulation symbols by performing processing operations on the symbol stream, and may generate signals by performing additional processing operations (e.g. analog conversion operation, amplification operation, filtering operation, up-conversion operations) on the modulation symbols. The signals generated by the modulators of the transceivers 363a to 363t may be transmitted through the antennas 364a to 364t.

The signals transmitted by the second communication node 300b may be received at the antennas 314a to 314r of the first communication node 300a. The signals received at the antennas 314a to 314r may be provided to demodulators (DEMODs) included in the transceivers 313a to 313r. The demodulator may obtain samples by performing processing operations (e.g. filtering operation, amplification operation, down-conversion operation, digital conversion operation) on the signals. The demodulator may perform additional processing operations on the samples to obtain symbols. A MIMO detector 320 may perform a MIMO detection operation on the symbols. The reception processor 319 may perform processing operations (e.g. de-interleaving operation, decoding operation, etc.) on the symbols. An output of the reception processor 319 may be provided to a data sink 318 and the controller 316. For example, the data may be provided to the data sink 318 and the control information may be provided to the controller 316.

Memories 315 and 365 may store the data, control information, and/or program codes. A scheduler 317 may perform scheduling operations for communication. The processors 311, 312, 319, 361, 368, and 369 and the controllers 316 and 366 shown in FIG. 3 may be the processor 210 shown in FIG. 2, and may be used to perform methods described in the present disclosure.

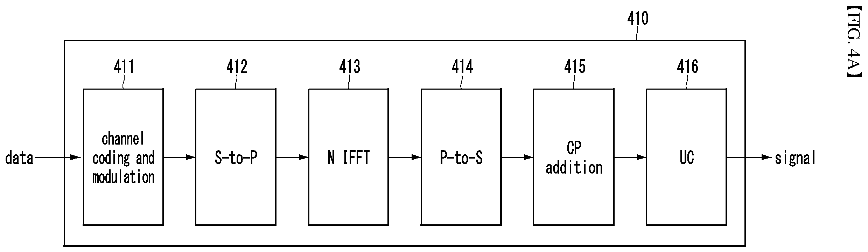

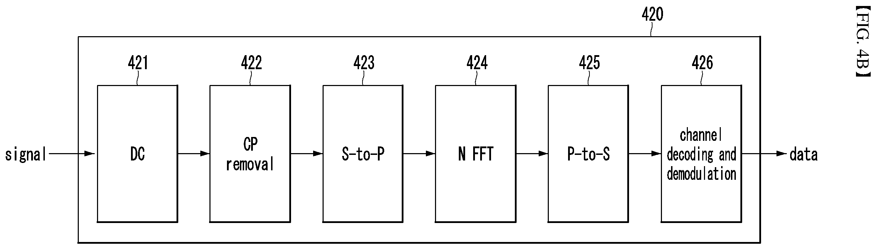

FIG. 4A is a block diagram illustrating a first exemplary embodiment of a transmission path, and FIG. 4B is a block diagram illustrating a first exemplary embodiment of a reception path.

As shown in FIGS. 4A and 4B, a transmission path 410 may be implemented in a communication node that transmits signals, and a reception path 420 may be implemented in a communication node that receives signals. The transmission path 410 may include a channel coding and modulation block 411, a serial-to-parallel (S-to-P) block 412, an N-point inverse fast Fourier transform (N-point IFFT) block 413, a parallel-to-serial (P-to-S) block 414, a cyclic prefix (CP) addition block 415, and up-converter (UC) 416. The reception path 420 may include a down-converter (DC) 421, a CP removal block 422, an S-to-P block 423, an N-point FFT block 424, a P-to-S block 425, and a channel decoding and demodulation block 426. Here, N may be a natural number.

In the transmission path 410, information bits may be input to the channel coding and modulation block 411. The channel coding and modulation block 511 may perform a coding operation (e.g. low-density parity check (LDPC) coding operation, polar coding operation, etc.) and a modulation operation (e.g. Quadrature Phase Shift Keying (OPSK), Quadrature Amplitude Modulation (QAM), etc.) on the information bits. An output of the channel coding and modulation block 411 may be a sequence of modulation symbols.

The S-to-P block 412 may convert frequency domain modulation symbols into parallel symbol streams to generate N parallel symbol streams. N may be the IFFT size or the FFT size. The N-point IFFT block 413 may generate time domain signals by performing an IFFT operation on the N parallel symbol streams. The P-to-S block 414 may convert the output (e.g., parallel signals) of the N-point IFFT block 413 to serial signals to generate the serial signals.

The CP addition block 415 may insert a CP into the signals. The UC 416 may up-convert a frequency of the output of the CP addition block 415 to a radio frequency (RF) frequency. Further, the output of the CP addition block 415 may be filtered in baseband before the up-conversion.

The signal transmitted from the transmission path 410 may be input to the reception path 420. Operations in the reception path 420 may be reverse operations for the operations in the transmission path 410. The DC 421 may down-convert a frequency of the received signals to a baseband frequency. The CP removal block 422 may remove a CP from the signals. The output of the CP removal block 422 may be serial signals. The S-to-P block 423 may convert the serial signals into parallel signals. The N-point FFT block 424 may generate N parallel signals by performing an FFT algorithm. The P-to-S block 425 may convert the parallel signals into a sequence of modulation symbols. The channel decoding and demodulation block 426 may perform a demodulation operation on the modulation symbols and may restore data by performing a decoding operation on a result of the demodulation operation.

In FIGS. 4A and 4B, discrete Fourier transform (DFT) and inverse DFT (IDFT) may be used instead of FFT and IFFT. Each of the blocks (e.g. components) in FIGS. 4A and 4B may be implemented by at least one of hardware, software, or firmware. For example, some blocks in FIGS. 4A and 4B may be implemented by software, and other blocks may be implemented by hardware or a combination of hardware and software. In FIGS. 4A and 4B, one block may be subdivided into a plurality of blocks, a plurality of blocks may be integrated into one block, some blocks may be omitted, and blocks supporting other functions may be added.

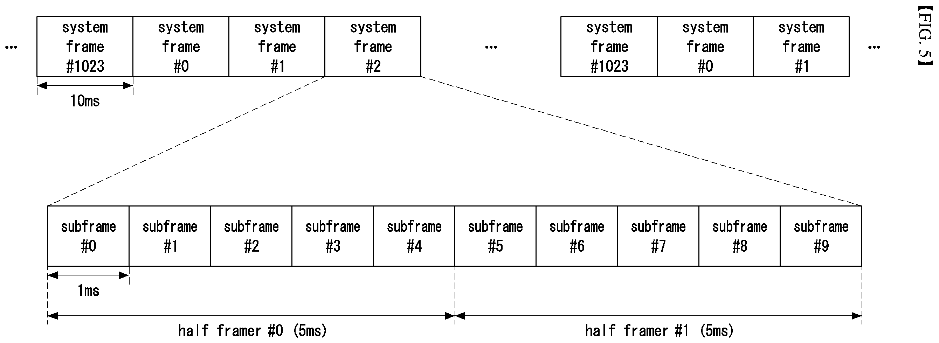

FIG. 5 is a conceptual diagram illustrating a first exemplary embodiment of a system frame in a communication system.

As shown in FIG. 5, time resources in the communication system may be divided on a frame basis. For example, system frames of the communication system may be configured continuously in the time domain. The length of the system frame may be 10 millisecond (ms). A system frame number (SFN) may be set to one of #0 to #1023. In this case, 1024 system frames may be repeated on the time domain of the communication system. For example, an SFN of a system frame after the system frame #1023 may be #0.

One system frame may include two half frames. The length of one half frame may be 5 ms. A half frame located at a starting region of the system frame may be referred to as 'half frame #0', and a half frame located at an ending region of the system frame may be referred to as 'half frame #1'. One system frame may include 10 subframes. The length of one subframe may be 1 ms. 10 subframes within one system frame may be referred to as subframes #0-#9.

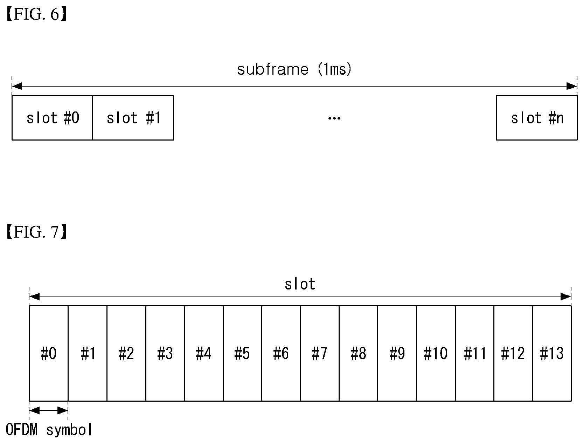

FIG. 6 is a conceptual diagram illustrating a first exemplary embodiment of a subframe in a communication system.

As shown in FIG. 6, one subframe may include n slots, and n may be a natural number. Accordingly, one subframe may consist of one or more slots.

FIG. 7 is a conceptual diagram illustrating a first exemplary embodiment of a slot in a communication system.

As shown in FIG. 7, one slot may include one or more symbols. For example, one slot shown in FIG. 7 may include 14 symbols. The length of slot may vary according to the number of symbols included in a slot and the length of symbol. Alternatively, the length of slot may vary according to a numerology.

The numerology applied to physical signals and channels in a communication system may be variable. The numerology may be adjusted to meet various technical requirements of the communication system. In a communication system where a cyclic prefix (CP)-based OFDM waveform technology is applied, the numerology may include a subcarrier spacing and a CP length (or CP type). Table 1 may illustrate a first exemplary embodiment of a method for configuring numerologies for a CP-OFDM-based communication system. Depending on a frequency band in which the communication system operates, at least some of the numerologies in Table 1 may be supported. Additionally, the communication system may support numerologies not listed in Table 1.

**[Table 1]**

| Subcarrier spacing | 15 kHz | 30 kHz | 60 kHz | 120 kHz | 240 kHz | 480 kHz |
|---|---|---|---|---|---|---|
| OFDM symbol length [µs] | 66.7 | 33.3 | 16.7 | 8.3 | 4.2 | 2.1 |
| CP length [us] | 4.76 | 2.38 | 1.19 | 0.60 | 0.30 | 0.15 |
| Number of OFDM symbols within 1ms | 14 | 28 | 56 | 112 | 224 | 448 |

When a subcarrier spacing is 15 kHz (e.g. µ = 0), the length of slot may be 1 ms. In this case, one system frame may include 10 slots. When a subcarrier spacing is 30 kHz (e.g. µ = 1), the length of slot may be 0.5 ms. In this case, one system frame may include 20 slots.

When a subcarrier spacing is 60 kHz (e.g. µ = 2), the length of slot may be 0.25 ms. In this case, one system frame may include 40 slots. When a subcarrier spacing is 120 kHz (e.g. µ = 3), the length of slot may be 0.125 ms. In this case, one system frame may include 80 slots. When a subcarrier spacing is 240 kHz (e.g. µ = 4), the length of slot may be 0.0625 ms. In this case, one system frame may include 160 slots.

The symbol may be configured as a downlink (DL) symbol, flexible (FL) symbol, or uplink (UL) symbol. A slot composed of only DL symbols may be referred to as a 'DL slot', a slot composed of only FL symbols may be referred to as a 'FL slot', and a slot composed of only UL symbols may be referred to as a 'UL slot'.

A slot format may be semi-statically configured through higher-layer signaling (e.g. RRC signaling). Information indicating a semi-static slot format may be included in system information, and the semi-static slot format may be configured cell-specifically. Additionally, a semi-static slot format may be further configured for each terminal through terminal-specific higher-layer signaling (e.g. RRC signaling). Flexible symbols in the cell-specific slot format may be overridden to be downlink symbols or uplink symbols through terminal-specific higher-layer signaling. Furthermore, a slot format may be dynamically indicated through physical layer signaling (e.g. slot format indicator (SFI) included in DCI). The semi-statically configured slot format may be overridden by the dynamically indicated slot format. For example, flexible symbols configured semi-statically may be overridden to be downlink symbols or uplink symbols by the SFI.

Reference signals may include Channel State Information-Reference Signal (CSI-RS), Sounding Reference Signal (SRS), Demodulation-Reference Signal (DM-RS), and Phase Tracking-Reference Signal (PT-RS). Channels may include Physical Broadcast Channel (PBCH), Physical Downlink Control Channel (PDCCH), Physical Downlink Shared Channel (PDSCH), Physical Uplink Control Channel (PUCCH), PUSCH (Physical Uplink Shared Channel), PSCCH (Physical Sidelink Control Channel), and PSSCH (Physical Sidelink Shared Channel). In the present disclosure, a control channel may refer to PDCCH, PUCCH, or PSCCH, and a data channel may refer to PDSCH, PUSCH, or PSSCH.

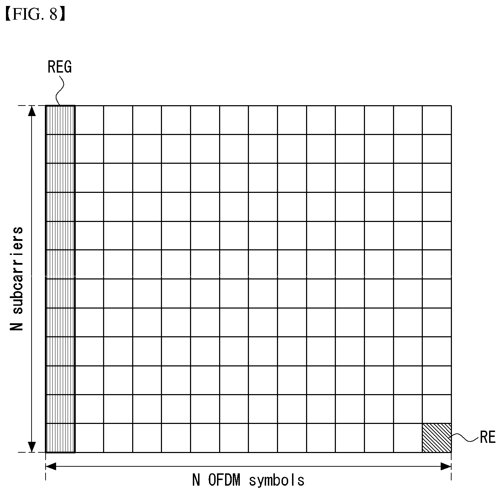

FIG. 8 is a conceptual diagram illustrating a first exemplary embodiment of a time-frequency resource in a communication system.

As shown FIG. 8, a resource composed of one OFDM symbol on the time axis and one subcarrier on the frequency axis may be defined as a 'resource element (RE)'. A resource composed of one OFDM symbol on the time axis and K subcarriers on the frequency axis may be defined as a 'resource element group (REG)'. The REG may include K REs. The REG may be used as a basic unit of resource allocation in the frequency domain. K may be a natural number. For example, K may be 12. N may be a natural number. In the slot shown in FIG.7, N may be 14. N OFDM symbols may be used as a basic unit of resource allocation in the time domain.

In the present disclosure, an RB may refer to a common RB (CRB). Alternatively, an RB may refer to a physical RB (PRB) or a virtual RB (VRB). In a communication system, a CRB may refer to an RB that constitutes a set of contiguous RBs (e.g. a common RB grid) based on a reference frequency (e.g. point A). A carrier and/or bandwidth part may be mapped onto the common RB grid. That is, a carrier and/or bandwidth part may be configured with CRB(s). The RBs or CRBs that constitute a bandwidth part may be referred to as PRBs, and a CRB index may be appropriately converted to a PRB index within the bandwidth part.

Downlink data may be transmitted through a PDSCH. A base station may transmit configuration information (e.g. scheduling information) of the PDSCH to a terminal through a PDCCH. The terminal may obtain the configuration information of the PDSCH by receiving the PDCCH (e.g. Downlink Control Information (DCI)). For example, the configuration information of the PDSCH may include a Modulation Coding Scheme (MCS) used for transmission/reception of the PDSCH, time resource information of the PDSCH, frequency resource information of the PDSCH, and feedback resource information for the PDSCH. The PDSCH may refer to a radio resource where the downlink data is transmitted and received. Alternatively, the PDSCH may refer to the downlink data itself. The PDCCH may refer to a radio resource where the downlink control information (e.g. DCI) is transmitted and received. Alternatively, the PDCCH may refer to the downlink control information itself.

The terminal may perform a monitoring operation for the PDCCH to receive the PDSCH transmitted from the base station. The base station may notify the terminal of configuration information for the PDCCH monitoring operation using a higher-layer message (e.g. Radio Resource Control (RRC) message). The configuration information for the PDCCH monitoring operation may include Control Resource Set (CORESET) information and search space information.

The CORESET information may include PDCCH DMRS information, PDCCH precoding information, and PDCCH occasion information, and the like. A PDCCH DMRS may be a DMRS used for demodulating a PDCCH. A PDCCH occasion refers to a region where a PDCCH may potentially exist, meaning it is a region where DCI can be transmitted. A PDCCH occasion may also be referred to as a PDCCH candidate. The PDCCH occasion information may include time resource information and frequency resource information for the PDCCH occasion. In the time domain, the length of the PDCCH occasion may be indicated in symbol units. In the frequency domain, the size of the PDCCH occasion can be indicated in RB units (e.g. in PRB units or CRB units).

The search space information may include a CORESET identifier (ID) associated with a search space, a periodicity of PDCCH monitoring, and/or an offset of PDCCH monitoring. The periodicity and offset of PDCCH monitoring may each be indicated in slot units. Additionally, the search space information may further include an index of a symbol where the PDCCH monitoring operation starts.

The base station may configure Bandwidth Part(s) (BWP(s)) for downlink communication. The BWP(s) may be configured differently for each terminal. The base station may notify the terminal of BWP configuration information using higher-layer signaling. The higher-layer signaling may refer to a transmission operation of system information and/or a transmission operation of RRC message(s). The number of BWPs configured for a single terminal may be one or more. The terminal may receive the BWP configuration information from the base station and identify the configured BWP(s) based on the received configuration information. When multiple BWPs are configured for downlink communication, the base station may activate one or more BWPs from among the multiple BWPs. The base station may transmit configuration information of the activated BWP(s) to the terminal using at least one of higher-layer signaling, Medium Access Control (MAC) Control Element (CE), or DCI. The base station may perform downlink communication using the activated BWP(s). The terminal may identify the activated BWP(s) by receiving the configuration information from the base station and perform downlink reception operations on the activated BWP(s).

In the future 6G communication system, in order to secure a spatial dimension that cannot be provided by the current massive MIMO system, a configuration in which a larger number of antennas are deployed over wide wall surfaces of buildings is being considered. Such an antenna system is defined as an extra-large scale massive MIMO (XL-MIMO) system, in which a larger number of antennas are distributed over wide surfaces compared to a massive MIMO system.

The XL-MIMO system may have an antenna structure in which a larger number of antennas than the massive MIMO are arranged on wide wall surfaces of buildings such as airports, shopping malls, and stadiums. The XL-MIMO system not only provides a high information transmission rate, low interference between user equipments (e.g. UEs), and high energy efficiency that can be obtained through the existing massive MIMO system, but also makes it possible to obtain a spatial dimension that could not be obtained in the massive MIMO system by widely arranging antennas on wide wall surfaces of buildings such as airports, shopping malls, and stadiums.

Unlike the massive MIMO system in which antennas are gathered in a narrow space, the XL-MIMO system has a phenomenon in which different physical channel characteristics between the XL-MIMO antennas and UEs appear because the antennas are widely arranged as described above. In other words, a phenomenon in which a channel with a UE varies according to a position of an XL-MIMO antenna appears. Such a phenomenon in which a channel with a UE varies according to a position of an XL-MIMO antenna is defined as a channel non-stationary characteristic.

Due to the channel non-stationary characteristic, in the XL-MIMO system, a meaningful signal is observed for a specific UE only in a specific antenna region among the entire antenna array of the XL-MIMO system. Here, the meaningful signal may refer to a signal whose reference signal received power (RSRP) exceeds a threshold value. For example, when a UE transmits an uplink (UL) signal to the XL-MIMO system, the meaningful UL signal may be received only in a specific subset of the entire antenna array of the XL-MIMO system, and when the XL-MIMO system transmits a downlink (DL) signal to a UE, only a DL signal transmitted from a specific subset of the entire antenna array of the XL-MIMO system may be a meaningful signal at the UE.

Such an antenna region in which a meaningful signal is observed for a specific UE in the XL-MIMO system due to the channel non-stationary characteristic is defined as a visibility region (VR).

In the XL-MIMO system, communication performance of a specific UE is defined in a limited manner to a VR, which is a specific subset of the entire antenna array of the XL-MIMO system. Accordingly, the XL-MIMO system needs to estimate a VR for each UE and share the estimated VR between the XL-MIMO system and the UE. In addition, the XL-MIMO system and the UE can improve communication resource efficiency only when communication is performed through the estimated VR.

When a VR of each UE is not known, the XL-MIMO system needs to transmit a DL signal through all antennas and receive a UL signal through all antennas. In other words, the XL-MIMO system that does not have knowledge of a VR needs to perform channel estimation and beam management processes even for antennas with poor transmission and reception performance. Due to this, not only communication resources such as time, frequency, and antennas are wasted, but also a computational burden of a base station increases. Therefore, when a UE performs initial access to the XL-MIMO system, a process of identifying a VR of the UE is very important.

In the current 5G communication system, when a base station and a UE perform communication, signals are transmitted and received by using an entire antenna array of the base station. However, in order to perform communication by using only some antennas among antennas of the base station or antennas of the UE in the future, the current standard introduces a concept of dividing an antenna array into a small subarray structure having a predetermined size in advance by using a panel concept. In the technical specification (TS) 38.214 among 3GPP standard documents, a precoding matrix indicator (PMI) is defined. According to the definition of PMI of TS 38.214, a configuration of an antenna array according to the number of CSI-RS antenna ports is defined in a single-panel/multi-panel environment. The configuration of the antenna array according to the number of CSI-RS antenna ports defines the number of horizontal antennas, the number of vertical antennas, and the number of beams.

In addition, in the same technical specification, different PMIs are distinguished and defined in tables according to a type of an antenna array, a number of layers, antenna ports, a codebook mode, and the like. Here, the type of the antenna array may be one of a single panel or a multi panel.

In a multi-panel MIMO system of the 5G NR standard, each panel may be composed of a plurality of radio frequency integrated circuits (RFICs). In the case of downlink (DL), a plurality of panels may cooperatively transmit a signal to one UE. In the case of uplink (UL), a plurality of panels provided in a UE may be utilized to cooperatively transmit a signal to a base station.

In general, as the number of antennas allocated to one panel increases, hardware implementation complexity increases; however, the multi-panel MIMO system provides advantages in terms of hardware design cost and power consumption. Additionally, when antenna panels are arranged such that a distance between antenna panels is sufficiently separated, a multiplexing gain may be obtained.

As described above, in the current 3GPP standard, in an environment using a very large number of antennas, multi-panel structures are defined and used in order to reduce computational complexity and power consumption and to selectively utilize a more suitable panel based on channel conditions of UEs. In particular, in a future 6G communication system such as an XL-MIMO system, a procedure for selecting an antenna region suitable for each UE from widely distributed antennas and allocating the antenna region as a VR may be required. In this case, a VR allocated to each UE needs to be flexibly selected to maximize communication performance rather than having a fixed form.

However, panels defined in the current 3GPP standard are limited to a rectangular structure, and the number of antennas included in each panel is also predetermined in a table. For these reasons, the method according to the current 3GPP standard is not suitable for arbitrarily selecting an antenna region appropriate for a condition of each UE such as a VR used in the XL-MIMO system. Therefore, in order to allocate a VR in the XL-MIMO system, a process for identifying an environment of the UE and requirements of the UE and determining a suitable antenna region is required.

In addition, when serving a plurality of UEs in the XL-MIMO system, a VR combination that provides sufficient communication performance to each UE needs to be efficiently determined. Unlike the current standard in which a UE is served by using all antennas of a base station, the XL-MIMO system needs to select antennas corresponding to the VR in consideration of various conditions such as a location of a UE to be served, a surrounding environment, and scatterers between the base station and the UE. Accordingly, when allocating a VR, additional overhead may occur in the existing 5G NR standard procedure may occur. In addition, an antenna region allocated as a VR may be greatly affected by the location and surrounding environment of each UE. Therefore, when a VR is allocated to a specific UE without considering other UEs, the XL-MIMO system may allocate the same VR to two or more UEs or may share at least a part of VRs allocated to different UEs.

When multiple UEs share a VR, communication performance may be degraded. Therefore, in the XL-MIMO system communicating with a plurality of UEs, a VR combination that minimizes inter-UE interference needs to be considered in a VR allocation process.

Based on the above description, the present disclosure provides a method and an apparatus for efficiently allocating a VR for each UE by considering not only the location and surrounding environment of the UE but also interference with other UEs in the XL-MIMO system. In addition, in the present disclosure, an initial access procedure considering VR allocation and related parameters are provided.

First, in the present disclosure, a situation is assumed in which a base station including an XL-MIMO system allocates a VR to each UE in order to simultaneously provide services to a plurality of UEs.

When a situation in which VRs are allocated to all UEs without considering other UEs is assumed, the base station may allocate an optimal VR to each UE in consideration of characteristics of each UE. Here, the characteristics of the UE may include at least one of an electromagnetic region in which the UE is located, a latency requirement, a target data rate, or mobility of the UE. In other words, the base station may allocate an optimal VR to each UE based on information on one or more characteristics of the UE characteristics.

However, when an optimal VR is allocated to each UE by considering only characteristics of each UE as described above, significant resources may be consumed in order to select an antenna region corresponding to the optimal VR. Such resource consumption may increase in proportion to the number of UEs. In addition, as described above, at least a part of VRs allocated to different UEs may overlap. When the base station simultaneously performs communication with UEs having at least partially overlapping VRs as described above, communication performance of the corresponding UEs may be degraded. A reason why at least a part of VRs allocated to different UEs overlap as described above is that the base station allocates VRs without considering other UEs when allocating a VR to each of UEs.

In general, when a distance between UEs is close, the UEs may have similar scatterer locations and/or the same number of scatterers. In other words, surrounding environments of adjacent UEs may be identical or similar. Due to this, when the base station allocates VRs to each of a plurality of UEs without considering other UEs, a considerable portion of the allocated VRs may overlap.

Accordingly, to avoid interference between UEs, the present disclosure proposes a method for allocating VRs such that overlap between VRs of nearby UEs is minimized. To allocate a VR combination that minimizes inter-UE interference in an XL-MIMO system supporting multiple UEs, the method may include three main operations.

First, the base station may allocate an optimal VR for supporting each UE according to the location of each UE, a surrounding environment, and scatter locations and the number of scatterers. This process may be performed by selectively considering at least one of an electromagnetic region, a latency requirement, a target data rate, or mobility of each UE as described above. When no overlap occurs among VRs allocated to UEs through the above procedure, the XL-MIMO system may have optimal communication performance.

Second, when all or part of VRs allocated to UEs through the previous procedure overlap, the base station may reallocate an overlapping region among the VRs based on requirements of the UE. By reallocating an overlapping antenna region of the VRs based on the requirements of the UEs, the base station may minimize interference between UEs. However, when an overlapping antenna region between UEs is large or the number of UEs sharing an antenna region is too large, a case in which requirements of some or all UEs are not satisfied after reallocation may occur.

Third, in order to solve a communication performance degradation problem due to reallocation of the VR in the second step, the base station having the XL-MIMO system may expand a VR of each UE by including antenna regions surrounding the already allocated VR. When an antenna region available for additional allocation exists around a divided VR, the base station may additionally allocate the available antenna region to the VR allocated in the second step. Since the additionally allocated antenna region is likely to share a channel state similar to that of the antenna region allocated as the VR in the first step, communication performance between the base station and the UE can be improved by additionally allocating an antenna region adjacent to the VR modified in the second step.

To perform the operations described above, the base station needs to be able to flexibly select antenna arrays to allocate an optimal VR to each UE. Accordingly, the present disclosure described below describes the three-step procedure as follows. In addition, in order to facilitate understanding of a procedure according to the present disclosure, the present disclosure is described based on the 5G NR standard in which standardization and partial commercialization are currently in progress. However, the present disclosure may be applied not only to 5G NR but also to all technical fields using XL-MIMO antennas such as 6G to be presented in the future.

First, a method for allocating a VR to an initial access UE in a base station using an XL-MIMO system is described. Second, a method for dividing the VR in the base station using the XL-MIMO system is described. Third, a method for expanding the divided VR in the base station using the XL-MIMO system is described.

### (1) Method for allocating a VR to an initial access UE in a base station using an XL-MIMO system

The present disclosure described below provides an exemplary embodiment in which a base station includes an XL-MIMO system. Accordingly, unless otherwise specified, a case in which the base station includes the XL-MIMO system is assumed. Accordingly, the XL-MIMO system may be regarded as the base station. In addition, a UE may have one or more UE panels. In other words, the base station and the UE may be capable of transmitting and receiving signals (or data) through beamforming. Accordingly, the base station may apply transmit beamforming to a signal to be transmitted to the UE by using XL-MIMO antennas and transmit the signal to the UE, and the UE may apply receive beamforming and receive the signal transmitted from the base station. In addition, the present disclosure described below assumes the following situations.

First, a situation is assumed in which the base station is already performing communication with a plurality of UEs.

Second, a situation is assumed in which a new UE that has not been performing communication with the base station intends to perform communication with the base station.

Third, a case is assumed in which VR determination is unnecessary for UE antennas. A reason for the third assumption is that the base station having the XL-MIMO system has a very large number of antennas, but the UE has a much smaller number of antennas compared to the number of antennas included in the XL-MIMO system. Accordingly, estimation of a VR for the UE antennas may be unnecessary.

Fourth, a case is assumed in which the base station knows the locations of UEs that are in communication with the base station. Various methods may be used for identifying the location of each UE. As a simplest example, a UE may report a location of the UE to the base station based on GPS or signals for positioning transmitted by the base station. As another example, the base station may estimate (or obtain) location information of the UE through various methods, for example, through cooperation with other base stations. As still another example, when the base station is composed of a central unit (CU), distributed unit(s) (DU(s)), and a plurality of radio units (RUs), the base station may estimate the location of the UE by using the plurality of RUs.

Fifth, a case is assumed in which the base station stores and/or manages information on VRs allocated to UEs in communication with the base station and information on antenna regions not allocated as VRs as candidate VRs.

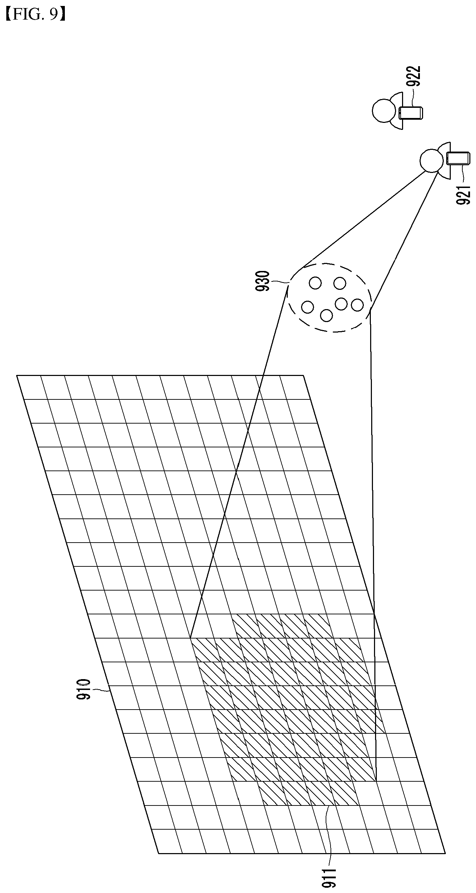

FIG. 9 is a conceptual diagram illustrating a case in which a UE communicating with a base station having an XL-MIMO antenna system and a newly entering UE are present.

As shown in FIG. 9, an XL-MIMO antenna 910 included in a base station (not shown in FIG. 9) is illustrated. A first UE 921 may be in communication with the base station. A scatterer 930 may exist between the first UE 921 and the XL-MIMO antenna 910. The scatterer 930 may not be an essential component for communication between the first UE 921 and the XL-MIMO antenna 910. As described above, the base station may allocate only antennas 911 in a specific portion of the XL-MIMO antenna 910 to the first UE 921 in order to communicate with the first UE 921. Here, the antennas 911 of the specific portion may correspond to the VR described above. In the following description, the VR allocated to the first UE 921 is referred to as a first VR 911. The first VR 911 allocated to the first UE 921 may vary depending on whether the scatterer 930 exists.

When performing downlink communication, the base station may transmit a signal by applying beamforming to the signal to be transmitted to the first UE 921 via the first VR 911 of the XL-MIMO antenna 910. The first VR 911 may be an antenna region allocated to the first UE 921 using a method according to the present disclosure described below and/or a search method using all panels of the XL-MIMO antenna 910. The signal transmitted from the base station may be transmitted to the first UE 921 via the scatterer 930. Accordingly, the first UE 921 may receive the signal transmitted from the base station. When performing uplink communication, a signal transmitted by the first UE 921 by applying beamforming may be transmitted to the first VR 911 of the XL-MIMO antenna 910 via the scatterer 930. Accordingly, the base station may receive the signal transmitted by the first UE 921 via the first VR 911 of the XL-MIMO antenna 910.

A case may occur in which a new second UE 922 intends to communicate with the base station. Here, the second UE 922 may be an initial access UE. In other words, the second UE 922 may not be a UE in an RRC idle mode or an RRC inactive mode. When the base station searches for a VR by using the entire antenna region of the XL-MIMO antenna 910 for the second UE 922 that needs to perform initial access, this may be very inefficient. Accordingly, in the following, a method for efficiently allocating a VR to the second UE 922 when UE(s) are already in communication with the base station is described.

In the present disclosure described below, a method for allocating a VR based on location information of the second UE 922 is described. In addition, the base station according to the present disclosure may be in a state in which location information of UEs in communication is known in advance. In general, two adjacent UEs in a communication system may have the same or similar VRs. When a UE closest to the second UE 922 is the first UE 921, the second UE 922 may have the same VR as the first UE 921 or a similar VR. Accordingly, when the second UE 922 performs initial access to the base station, the base station needs to be able to acquire location information of the second UE 922. Various methods may be used by the base station to acquire location information of a UE. An exemplary embodiment thereof is described below with reference to the drawings.

When the base station acquires the location information of the second UE 922, the base station may calculate a distance to UE(s) in communication. The base station may select the UE closest to the second UE 922. The base station may transmit a reference signal (RS) via a VR allocated to the UE closest to the second UE 922. The second UE 922 may receive the RS from the base station, and may measure a power (e.g. RSRP) of the received RS. The second UE 922 may transmit a report message to the base station based on the measured RSRP. The base station may receive the report message from the second UE 922, and may determine whether the VR allocated to the UE closest to the second UE 922 is suitable for communication with the second UE 922 based on the received report message.

A specific exemplary embodiment based on the above description is described with reference to the accompanying drawings.

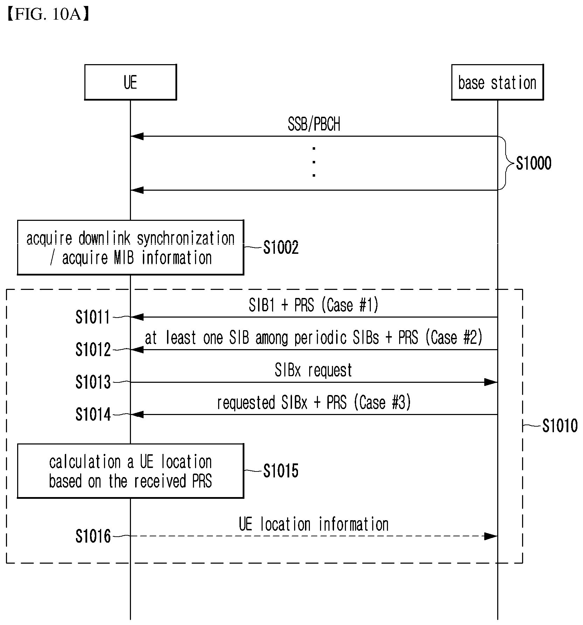

FIG. 10A is a sequence diagram illustrating reporting of location information to a base station when a new UE performs an initial access procedure to the base station having an XL-MIMO antenna system.

In step S1000, the base station may periodically broadcast a synchronization signal/physical broadcast channel (SS/PBCH) block (or, a synchronization signal block (SSB)) so that all UEs within a cell of the base station can receive the SS/PBCH block (or SSB). For example, in a 5G NR system, the SS/PBCH may be transmitted with a periodicity of 20 ms. Accordingly, a UE intending to access the base station may receive the SS/PBCH block from the base station.

In step S1002, the UE receiving the SS/PBCH block from the base station may acquire downlink synchronization based on the synchronization signal. In addition, the UE may acquire part of system information from a master information block (MIB) included in the PBCH. The MIB may include essential information related to a cell and information for receiving system information block 1 (SIB1) among SIBs when the UE performs an initial cell selection procedure. In the case of the 5G NR system, various types of SIBs exist, and information included in each of the SIBs may be distinguished by identifiers assigned to the SIBs such as SIB1, SIB2, and SIB3.

Step S1010 may correspond to a procedure in which the UE acquires an SIB from the base station. In 5G NR, the MIB and SIB1 may be referred to as minimum system information (SI). In addition, SIB1 may be referred to as remaining minimum system information (RMSI). The UE may receive SIB1 based on the MIB transmitted by the base station.

According to an exemplary embodiment of the present disclosure, the base station may transmit an SIB together with a positioning reference signal (PRS) to quickly acquire UE location information. Various cases in which the SIB and the PRS are transmitted together are described below.

In step S1011, the base station may transmit the PRS together with SIB1. When the SIB1 and the PRS are transmitted together, frequency and time offset values of the PRS may be transmitted at a pre-defined (or pre-configured or preset) resource location according to the technical specifications. Accordingly, when the PRS is transmitted together with SIB1 in step S1011, the UE may receive the PRS simultaneously while acquiring SIB1. The UE may identify transmission schemes of other SIBs based on the received SIB1. For example, the SIB1 may include information indicating SIBs periodically transmitted among SIBs other than SIB1 and SIBs transmitted upon request. Accordingly, the UE may identify the SIBs periodically transmitted and the SIBs transmitted upon request by acquiring SIB1. In addition, the UE may estimate the UE location by using the PRS received from the base station. When the UE estimates the location of the UE by using the PRS, the UE may estimate the location based on the reception timing of the PRS. In addition, when estimating the location of the UE by using the PRS, the UE may further use at least one of time difference of arrival (TDOA), angle of arrival (AoA), and/or angle of departure (AoD).

In FIG. 10A, a case in which the SIB1 and the PRS are transmitted together is referred to as Case #1. Accordingly, when the SIB1 and the PRS are transmitted together, the PRS may not be transmitted in Case #2 and Case #3 described below. Conversely, when the SIB and the PRS are transmitted in Case #2 and Case #3, the SIB1 may not be transmitted together with the PRS. As another example, Case #1, Case #2, and Case #3 may be used together.

In step S1012, the base station may transmit all periodically transmitted SIBs or at least one SIB among the periodically transmitted SIBs together with the PRS. When at least one SIB and the PRS are transmitted together, a frequency offset and a time offset value of the PRS may be transmitted at a predefined resource location according to the technical specifications. Accordingly, in step S1012, the UE may receive the PRS together with all SIBs transmitted by the base station or may receive the PRS together with at least one SIB among the periodically transmitted SIBs. The UE may acquire system information transmitted by the base station from the received SIB(s). In addition, the UE may estimate the UE location using the PRS received from the base station. As a method for calculating the location of the UE based on the PRS, the same method as described above in Case #1 may be used.

As described above, when Case #1 in which the SIB1 and the PRS are transmitted together is used, at least one SIB among the periodic SIBs corresponding to Case #2 may not be transmitted together with the PRS. Conversely, when at least one SIB among the periodic SIBs and the PRS are transmitted together, the SIB and the PRS may not be transmitted together in Case #1 and Case #3. As another example, as described above, Case #1, Case #2, and Case #3 may be performed together.

In step S1013, when the UE needs to request specific system information (e.g. SIBx) from the base station, the UE may transmit an SIBx request message to the base station. A case in which the UE transmits the SIBx request message to the base station may correspond to a case in which the SIBx is required. Accordingly, the base station may receive the SIBx request message from the UE in step S1013. In response to reception of the SIBx request message, the base station may transmit the requested SIBx to the UE in step S1014. In this case, the base station may transmit the PRS to the UE together with the SIBx. Accordingly, the UE may receive the PRS together with the SIBx from the base station in step S1014. The UE may acquire system information based on the received SIBx, and may calculate the UE location based on the PRS received from the base station. As a method for calculating the UE location based on the PRS, the same method as described above in Case #1 may be used.

The PRS described above is provided as an example in which the PRS is transmitted together with at least one SIB among the SIBs. In other words, in Case #1, the base station may transmit the SIB1 together with the PRS; in Case #2, the base station may transmit at least one SIB among periodic SIBs together with the PRS; and in Case #3, the base station may transmit an SIB transmitted in response to a UE request together with the PRS.

Accordingly, the UE may receive the PRS through at least one of Case #1 to Case #3 described above. In step S1015, the UE may calculate the UE location based on the received PRS. In step S1016, the UE may transmit UE location information to the base station. Accordingly, the base station may receive the UE location information from the UE in step S1016.

A method for transmitting the UE location information is described with reference to later drawings. In FIG. 10A, a method in which the UE reports its location to the base station is described as an example. In other words, in the case of FIG. 10A, the UE receiving the PRS from the base station during a downlink synchronization process may calculate its location and report the location to the base station. Alternatively, the UE may transmit a reference signal to the base station, and the base station may estimate the UE location. In other words, the UE may transmit an uplink signal so that the base station can estimate the UE location. A method in which the base station estimates the UE location is described below.

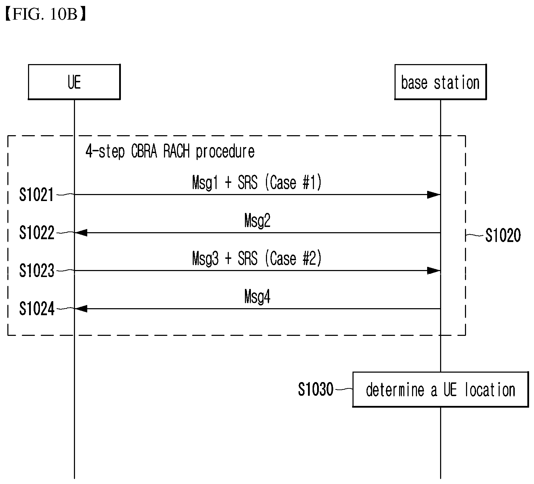

FIG. 10B is a sequence diagram illustrating a case in which a new UE transmits a reference signal in a random access procedure to a base station having an XL-MIMO antenna system.

Before referring to FIG. 10B, as is well known, a random access procedure may be classified into a two-step random access scheme and a four-step random access scheme. In addition, the random access procedure may be classified into a contention based random access (CBRA) scheme and a contention free random access (CFRA) scheme. In the present disclosure, since an initial access procedure of a UE is assumed, an example of FIG. 10B may be based on the four-step CBRA scheme. However, based on the contents described in FIG. 10B, the disclosed method may be applied not only to the two-step scheme but also to the CFRA scheme.

In addition, the procedure of FIG. 10B may be performed when UE location information is not acquired in the procedure of FIG. 10A or when the PRS is not used in the procedure of FIG. 10A. For example, when the base station acquires UE location information through the method using the PRS described in FIG. 10A, an operation for acquiring UE location information by the base station among the procedures described in FIG. 10B may not be performed. As another example, the procedure of FIG. 10A and the procedure of FIG. 10B described below may be performed together.

Step S1020 may correspond to a RACH procedure based on the four-step CBRA scheme as described above.

In step S1021, the UE may transmit a first message (Msg1) and a sounding reference signal (SRS) to the base station. The first message may be configured as a sequence selected based on information included in the SIB1 described above in FIG. 10A in 5G NR. The Msg1 may be referred to as a random access preamble, and may be transmitted in a preconfigured RACH occasion (RO). Information on the RO (i.e. RO information) may be acquired based on system information (e.g. SIB1). The RO information may be information on a resource (e.g. time and frequency) for transmitting the RACH preamble.

In the present disclosure, a method for enabling the base station to quickly acquire a UE location during an initial access procedure may be provided. Accordingly, in FIG. 10B, a case in which the SRS is transmitted together with the Msg1 of the RACH procedure is referred to as Case #1. In Case #2 described below, the Msg1 and the SRS may not be transmitted together. In other words, in Case #2, the UE may transmit only the Msg1 in step S1021. Conversely, in Case #1, the UE may not use Case #2. As another example, the UE may use both Case #1 and Case #2.

In step S1021, the base station may receive the Msg1 and the SRS from the UE. The base station may identify the existence of a new UE by receiving the Msg1, and may calculate a timing advance (TA) value by using the Msg1. In addition, the base station may estimate the UE location by using the SRS received together with the Msg1. When the base station estimates the UE location by using the SRS, the base station may estimate (or calculate) the UE location based on the reception timing of the SRS. In addition, when estimating the location of the UE by using the SRS, the base station may further use at least one of TDOA, AoA, and/or AoD.

In step S1022, the base station may transmit a second message (Msg2) to the UE in response to the Msg1. The second message may be referred to as an RA response (RAR), and may include time information (e.g. a TA value) based on a distance between the UE and the base station, uplink grant information, and other control information. Accordingly, in step S1022, the UE may receive the Msg2 within a window configured to receive the Msg2, and may acquire various types of information such as TA information and uplink grant information from the received Msg2.

In step S1023, the UE may transmit a third message (Msg3) and the SRS. The Msg3 may be transmitted using a resource based on the uplink grant information included in the Msg2. In addition, in an initial access procedure, the Msg3 may include an RRC setup request. Accordingly, the base station may receive the Msg3 in step S1023, and may also receive the SRS transmitted together with the Msg3. When the SRS is received together with the Msg3 in step S1023, the base station may estimate (or calculate) the UE location by using the SRS as described above in step S1021.

In addition, a case in which the Msg3 and the SRS are transmitted may correspond to Case #2 for enabling the base station to estimate the UE location through the uplink as described above. Accordingly, when Case #1 is performed, Case #2 may not be performed. Conversely, when Case #2 is performed, Case #1 may not be performed. As another example, both Case #1 and Case #2 may be performed.

In step S1024, the base station may transmit a fourth message (Msg4) to the UE. The Msg4 may be a message for contention resolution. The Msg4 may include a UE identifier for contention resolution. The UE may receive the Msg4 from the base station. Accordingly, the UE may receive the Msg4 in step S1024, and may acquire the UE identifier from the received Msg4.

In step S1030, the base station may determine the UE location based on the SRS received from the UE in the procedures of Case #1 and/or Case #2. In the case in which only Case #1 is used or only Case #2 is used, the base station may determine a value estimated by the above method as the UE location. When Case #1 and Case #2 are used together or when location information of the UE is received from the UE based on the method described above in FIG. 10A, the base station may determine the location of the UE by comparing an SRS-based estimated value with the received location information.

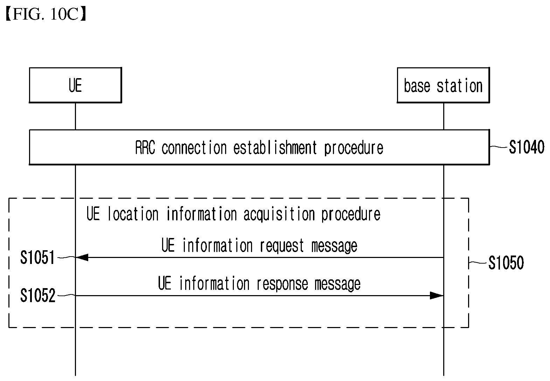

FIG. 10C is a sequence diagram illustrating a case in which a new UE provides UE location information to a base station after establishing an RRC connection establishment with the base station having an XL-MIMO antenna system.

As described above in FIG. 10B, the procedure may be performed after a RACH procedure. When UE location information is not acquired or when a UE location acquisition procedure is not performed in FIG. 10A and/or FIG. 10B, the base station may acquire the UE location information through the procedure of FIG. 10C.

In step S1040, the new UE may perform an RRC connection establishment procedure with the base station having the XL-MIMO antenna. The RRC connection establishment procedure may be performed in accordance with 5G NR. In the case of a UE performing initial access, as described above in FIG. 10B, the UE may transmit an RRC setup request message to the base station, thereby initiating the RRC connection establishment procedure. The base station may provide RRC configuration information to the UE through the RRC connection establishment procedure of step S1040. Accordingly, the UE may receive the RRC configuration information from the base station through the RRC connection establishment procedure of step S1040.

In step S1050, the base station may perform a UE location information acquisition procedure with the UE. The UE location information acquisition procedure may be performed by using current 5G NR specifications, or may be performed by modifying a part of the 5G NR specifications, or may be performed by defining a new message.

In step S1051, the base station may transmit a UE location information request message to the UE. In an exemplary embodiment, a UE information request message defined in the 5G NR specifications may be used as the UE location information request message. According to 5G NR specifications, the UE information request message may include a coarse UE location request field. Accordingly, the base station may request information on a coarse location of the UE by transmitting the UE information request message to the UE. The UE information request message may include additional information. Since the present disclosure describes a procedure in which the base station acquires the location information of the UE, descriptions of information not related to the present disclosure are omitted.

Accordingly, the UE may receive the UE information request message in step S1051. The UE may generate a UE information response message in response to the UE information request message. The UE may transmit the UE information response message to the base station in step S1052. In this case, the UE information response message may include coarse UE location information. When the UE is capable of acquiring its location by using a global navigation satellite system (GNSS), the information on the UE location may be information mapped based on a predefined resolution corresponding to latitude and longitude acquired by the UE using the GNSS.

In step S1052, the base station may receive the UE information response message from the UE, and may acquire coarse UE location information included in the UE information response message.

The above description corresponds to a case based on the current 5G NR specifications. When the 5G NR specifications are configured to include more detailed UE location information, the base station may acquire an accurate location of the UE through transmission and reception of a UE information request message and a UE information response message. For example, instead of performing step S1051 and step S1052, a new message may be defined to acquire the UE location information.

The base station may transmit a UE location information request message to the UE. The UE location information request message may be a newly defined message. As another example, the UE location information request message may be a message configured to report a UE location by adding an additional field to an existing message.

When the UE receives the UE location information request message from the base station, the UE may transmit a response message including the UE location information to the base station in response. In this case, the UE location information may be a location of the UE acquired by using GNSS, or may be UE location information estimated based on signals received from one or more base stations.

In addition to the methods described above, the base station may acquire the UE location information by another method. For example, the base station may periodically transmit SSB beams as described above in FIG. 10A. The SSB beams may be beamformed and transmitted in respective directions. The UE may select the SSB beam with the highest RSRP value through a beam search procedure based on SSB transmissions. Thereafter, the UE may perform a RACH procedure. When transmitting an RA preamble, the UE may perform beamforming in a direction in which an SSB having the highest value among received beams is transmitted and may transmit the RA preamble.

The base station may receive the RA preamble from a specific direction, that is, a direction corresponding to a specific SSB. Accordingly, the base station may identify the direction in which the RA preamble is received. In other words, the base station may identify an AoA. In addition, the base station may calculate (or identify) a distance between the UE and the base station based on the RA preamble. The distance between the UE and the base station may be determined based on a TA value. In the above-described manner, the base station may estimate the UE location based on the beam direction and the distance between the base station and the UE.

By using at least one of the methods described in FIG. 10A to FIG. 10C, the base station may acquire the location of the new UE. Thereafter, the base station needs to determine whether the new UE supports VR. When the new UE is a VR-capable UE, the base station may allocate an appropriate VR to the new UE. Hereinafter, a procedure for determining whether the UE supports VR and a procedure for searching for an appropriate VR are described.

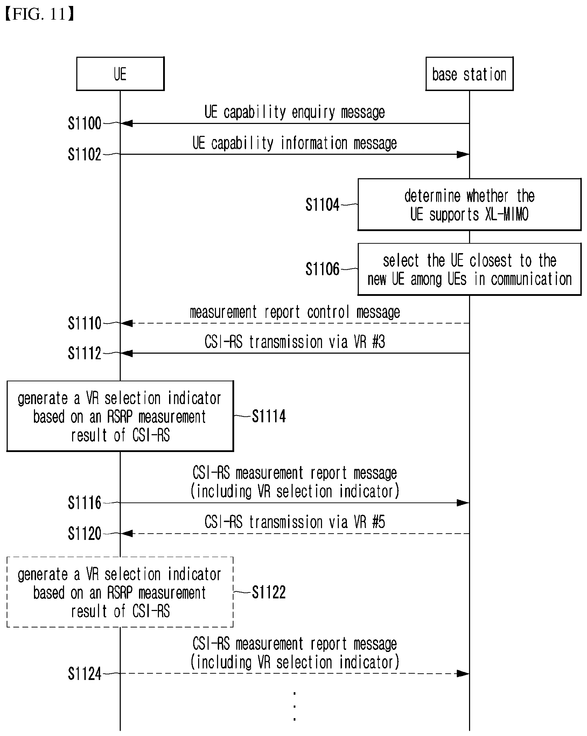

FIG. 11 is a sequence diagram illustrating a procedure in which a base station having an XL-MIMO antenna system searches for a VR based on a capability of a new UE.

In step S1100, the base station may transmit a UE capability enquiry message to the UE. The UE capability enquiry message may include a field requesting information on whether the UE is a UE capable of communication using an XL-MIMO antenna. Accordingly, the UE may receive the UE capability enquiry message from the base station in step S1100. The UE receiving the UE capability enquiry message may generate a UE capability information message. Upon receiving a request for information on whether the UE is a UE capable of communication using an XL-MIMO antenna from the base station, the UE may generate a UE capability information message including information indicating whether the UE supports communication using an XL-MIMO antenna. For example, similarly to a UE power class defined in the current 5G NR specifications, whether the UE supports VR may be defined in the specifications by classifying UEs into different classes according to hardware performance of the UEs. Accordingly, the UE may generate the UE capability information message by indicating whether the UE supports VR or by including a VR support class value.

In step S1102, the UE may transmit the UE capability information message to the base station. Accordingly, the base station may receive the UE capability information message from the UE in step S1102.

In step S1104, the base station may determine whether the UE supports XL-MIMO based on the UE capability information message. When information indicating whether the UE supports XL-MIMO is not included in the UE capability information message or when the UE capability information message indicates that the UE does not support XL-MIMO, the base station may not perform subsequent procedures. On the other hand, when information on whether the UE supports XL-MIMO is included and the UE indicates that the UE supports XL-MIMO, the following procedures for allocating a VR to the new UE may be performed.

In step S1106, the base station may select the UE closest to the new UE among UEs in communication or may select two or more UEs within a preconfigured threshold distance among adjacent UEs. In order to select the UE closest to the new UE among the UEs in communication in step S1106, the base station may first calculate a distance between the new UE and each of the UEs in communication. An example of a result of calculating the distance between the new UE and each of the UEs in communication may be shown in Table 2 below. In Table 2 below, the UEs may be UEs in communication, and it is assumed that all five UEs perform communication by using VRs. However, this is merely an example for convenience of description, and the number of UEs in actual communication may be greater or smaller than that shown in Table 2.

**[Table 2]**

| UE index | VR index | Distance to new UE |
|---|---|---|
| UE #1 | VR #1 | 35 |
| UE #2 | VR #2 | 143 |
| UE #3 | VR #3 | 8 |
| UE #4 | VR #4 | 56 |
| UE #5 | VR #5 | 17 |

As assumed above, the base station may already know location information of UEs in communication. In addition, the location of the new UE may be calculated by using at least one of the methods described in FIG. 10A to FIG. 10C. Accordingly, the base station may select one UE among UEs in communication with the new UE and may calculate a distance between the two UEs.

For example, when the base station has only approximate angle and distance information for the UE, the base station may calculate a distance between the new UE and each of the UEs in communication by using only the approximate angle and distance information.

As another method, when exact positions of all UEs can be obtained using GNSS from all UEs in communication and the new UE, the base station may calculate a distance by determining a difference between locations of the two UEs.

As exemplified in Table 2 above, after calculating distances between the new UE and UEs in communication, the base station may select a UE in communication having the smallest distance value as the closest UE. Accordingly, based on Table 2, UE #3 may be the UE closest to the new UE.

In addition, when location information of the new UE and/or UEs in communication is inaccurate, the base station may select two or more UEs in communication as a candidate group for determining a VR for the new UE. As another example, when the base station knows only a coarse location of the new UE and knows exact locations of UEs in communication, the base station may select UEs in communication located within a certain range (distance) based on the coarse location, as a candidate group for determining a VR for the new UE.

According to the above description and the example of Table 2, when only one UE among UEs in communication is selected, UE #3 may be included in the candidate group for determining a VR for the new UE. As another example, when a preconfigured range among UEs in communication is 20 m, UE #3 and UE #5 may be included in the candidate group for determining a VR for the new UE.

When UE #3 and UE #5 are included in the candidate group for VR determination for the new UE, the base station needs to select one UE first among UE #3 and UE #5. The base station may determine one UE from the candidate group based on calculated distances as exemplified in Table 2. For example, the base station may select UE #3 located at a shorter distance to the new UE among UEs in communication satisfying a condition (e.g. within 20 m).

Thereafter, the base station may perform a procedure for determining whether the VR allocated to a UE is suitable for the new UE.

In step S1110, the base station may transmit a measurement report control message to the UE. The measurement report control message may be a newly defined message according to the present disclosure. The measurement report control message may be configured as an RRC reconfiguration message including information described below, may be configured as a medium access control control element (MAC CE), or may be configured as downlink control information (DCI).

The measurement report control message may include configuration information for an RS transmitted to the new UE and/or report configuration information for the RS. When information related to VR configuration is transmitted to the new UE in the RRC configuration information in the procedure of FIG. 10C described above, step S1110 may be omitted. The measurement report control message or the RRC configuration information of step S1110 may include threshold information (i.e. VR selection RSRP threshold) for VR selection. The threshold for VR selection may be set to a value lower than an RSRP threshold used in a beam management procedure. However, when the threshold for VR selection is set to a value that is too low, a channel may be degraded during communication. Accordingly, the thresholds for VR selection may be preconfigured as two or more values. When two or more thresholds are configured, the base station may indicate to the UE which threshold to use in step S1110.

The RS configuration information included in the measurement report control message or the RRC configuration information may include resource information (e.g. time resources, frequency resources, and/or number of transmissions) in which the RS is transmitted. In addition, the RS configuration information may include information on the type of RS to be transmitted. In the present disclosure, for convenience of description, a case is assumed in which the RS transmitted for VR selection is a CSI-RS. However, the RS transmitted for VR selection is not limited to a CSI-RS. For example, the RS transmitted for VR selection may be a new RS or may be other RSs besides CSI-RS among RSs used in the current 5G NR.

The report configuration information of the RS included in the measurement report control message or the RRC configuration information may be information on a reporting scheme for reporting the RS used for VR selection after measurement. The report configuration information of the RS may be configured such that reporting is performed using one bit. In the following description, a one-bit indicator indicating whether an RSRP value of the received RS is equal to or greater than a threshold for VR selection is referred to as a VR selection indicator (i.e. *VRselectionindicator*).

According to an exemplary embodiment of the present disclosure, the report configuration information of the RS may be configured such that the UE reports only the VR selection indicator. As another example, the report configuration information of the RS may be configured such that the UE reports both the VR selection indicator and the RSRP value of the received RS. Here, the VR selection indicator may be one-bit information.

The report configuration information of the RS may further include information on a scheme for configuring the VR selection indicator. For example, the report configuration information of the RS may further include information indicating that the VR selection indicator is reported as '1' when the RSRP value of the received RS is equal to or greater than the threshold for VR selection, and the VR selection indicator is reported as '0' when the RSRP value of the received RS is less than the threshold for VR selection. As another example of the scheme for configuring the VR selection indicator, the report configuration information of the RS may further include information indicating that the VR selection indicator is reported as '+1' when the RSRP value of the received RS is equal to or greater than the threshold for VR selection, and the VR selection indicator is reported as '-1' when the RSRP value of the received RS is less than the threshold for VR selection.

A reason why the VR selection indicator is configured as one bit is that the base station already knows an optimal beamforming vector to be used for transmission to UE #3 via VR #3. Accordingly, even when the new UE does not report other information for beamforming to the base station, the base station may determine a beamforming vector for the new UE to be the same as or similar to that of UE #3.

In step S1112, the base station may transmit a CSI-RS to the new UE via VR #3 allocated to UE #3. Accordingly, the UE may receive the CSI-RS from the base station via VR #3 in step S1112.

In step S1114, the UE may determine whether an RSRP measurement value of the received CSI-RS is equal to or greater than a threshold for VR selection based on the RSRP measurement result of the received CSI-RS and/or RRC configuration information from step S1110. An example of an RSRP value of the CSI-RS measured at the UE and a threshold for VR selection may be exemplified as Table 3 below.

**[Table 3]**

| VR index | RSRP value for CSI-RS measured at new UE | Threshold for VR selection |
|---|---|---|
| VR #3 | RSRP_72 | RSRP_60 |

As shown in Table 3, when the RSRP value for the CSI-RS transmitted via VR #3 allocated to UE #3 and measured at the new UE is equal to or greater than the threshold for VR selection, the UE may generate a report message for reporting measurement results. The report message may include the VR selection indicator as described above. When only one UE is selected in Table 2 described above, the results may be obtained as shown in Table 3.

In step S1116, the UE may report the VR selection indicator to the base station. The VR selection indicator may be included in a CSI-RS measurement report message as used in 5G NR. However, the CSI-RS measurement report message according to the present disclosure may not include an RSRP value. In other words, the CSI-RS measurement report message may include only the VR selection indicator, or may include only an RSRP value for the received CSI-RS, or may include both the RSRP value for the received CSI-RS and the VR selection indicator information.

The base station may receive the CSI-RS measurement report message transmitted by the UE in step S1116, and may determine whether VR #3 is suitable for the new UE based on information included in the CSI-RS measurement report message. When VR #3 is suitable for the new UE, procedures after step S1120 may not be performed. On the other hand, when VR #3 is not a VR suitable for the new UE, the base station may perform step S1120 or may perform a VR configuration procedure for the new UE.

Meanwhile, when VR #3 is a VR suitable for the new UE and an additional beamforming vector needs to be determined for the new UE, the base station may determine the beamforming vector by using the following method.

The base station may transmit an additional CSI-RS to the new UE by using a first beam used by a UE in communication via VR #3 and a second beam and/or a third beam adjacent to the first beam. The UE may measure an RSRP value for each of the CSI-RS received through the first beam, the CSI-RS received through the second beam, and the CSI-RS received through the third beam. The UE may compare a first RSRP value measured for the CSI-RS received through the first beam, a second RSRP value measured for the CSI-RS received through the second beam, and a third RSRP value measured for the CSI-RS received through the third beam with the threshold for VR selection. The UE may transmit a CSI-RS measurement report message for each of the first RSRP value, the second RSRP value, and the third RSRP value. The CSI-RS measurement report message may include the measured RSRP value(s) or may include only the VR selection indicator. A reason for reporting the measured RSRP values in the CSI-RS measurement report message is to allow the base station to select a corresponding beam when two or more beams among the first beam, the second beam, and the third beam exceed the threshold for VR selection.

In the process of determining the additional beamforming vector described above, a method in which the base station transmits the CSI-RS by using only one beam supporting the existing UE and a method of transmitting the CSI-RS to the new UE by using a plurality of beams may be selectively used.

On the other hand, when VR #3 is not suitable for the new UE, the base station may select a candidate UE that has not yet undergone the verification procedure among the candidate group for VR determination. In the above example, the base station has verified whether VR #3 allocated to UE #3 is suitable for the new UE. Accordingly, UE #5 may be included in the candidate group for VR determination. When UE #5 is included in the candidate group, the following procedure may be performed.

In step S1120, the base station may transmit a CSI-RS via VR #5 corresponding to UE #5 in the candidate group for VR determination for the new UE. The procedure of step S1120 may be the same as step S1112. In step S1120, the UE may receive the CSI-RS, and in step S1122, the UE may generate a VR selection indicator based on the RSRP measurement result of the CSI-RS. Step S1122 may be the same procedure as step S1114 described above. In step S1124, the UE may transmit a CSI-RS measurement report message to the base station. Accordingly, the base station may receive the CSI-RS measurement report message for VR #5 from the UE. Step S1124 may be the same procedure as step S1116 described above.

The procedures using VR #3 and VR #5 described above may be performed only for a limited number of VRs. When procedures of step S1112 to step S1116 are performed for too many VRs, the accuracy for VR measurement may be reduced, and a very long time may be required, and thus this may be undesirable. Accordingly, the base station may determine a VR suitable for the new UE by using VRs allocated to an appropriate number of UEs in communication.

When a VR suitable for the new UE is determined, the base station may transmit a VR allocation message to the new UE. When a VR suitable for the new UE is not determined, the VR allocation message may include new VR information described in Section (2). In addition, when a VR suitable for the new UE is not determined, the base station may transmit a measurement report control message to the new UE and UEs in communication together with or after transmitting the VR allocation message.

Through the procedure described above, a VR suitable for the new UE may be determined. When the VR suitable for the new UE is determined, the base station may determine whether the UE in communication and the new UE can share the VR. For example, a case is assumed in which VR #3 used by UE #3 is determined as a suitable VR for the new UE.

The base station may determine whether UE #3 and the new UE can share VR #3 by using one of time division multiplexing, frequency division multiplexing, or code division multiplexing. When UE #3 and the new UE can share VR #3 by using one or more of the above multiplexing schemes, the base station may allocate VR #3 to the new UE. On the other hand, when UE #3 and the new UE cannot share VR #3 by using one or more of the multiplexing schemes described above, the base station may need to reallocate a VR to the new UE. A VR reallocation procedure is in Section (2) below.

Meanwhile, when only one UE in communication is included in the candidate group and the VR of that UE is not suitable for the new UE, or when two or more UEs in communication are included in the candidate group and all VRs corresponding to the two or more UEs included in the candidate group are not suitable for the new UE, the base station may perform a VR search procedure for the new UE.

Two methods may be considered for the VR search procedure for the new UE. As a first method, the base station may assume that a location of the UE is not known and may perform a procedure of finding a VR suitable for the new UE by using the entire XL-MIMO antenna.

As a second method, since the location information of the UE is known as described above in FIG. 10A to FIG. 10C, the base station may form beams toward the region corresponding to the UE location to reduce the VR search time for the new UE.

In the second method, since a direction of the UE and a distance between the UE and the base station are known, a number of steps for finding an optimal VR may be reduced by performing beamforming in directions adjacent to the corresponding direction.

### (2) Method for dividing a VR in a base station using an XL-MIMO system

Section (2) described below may be performed when a VR of a UE in communication is the same as an optimal VR for the new UE and the two UEs cannot share the corresponding VR. In other words, based on the description of Section (1), this may correspond to a case in which the VR of the UE in communication is determined to be the same as the optimal VR for the new UE. In addition, it may correspond to a case in which the VR of the UE in communication cannot be shared with the new UE by using any multiplexing scheme. A method for appropriately dividing and using the corresponding VR between the UE in communication and the new UE is described below.

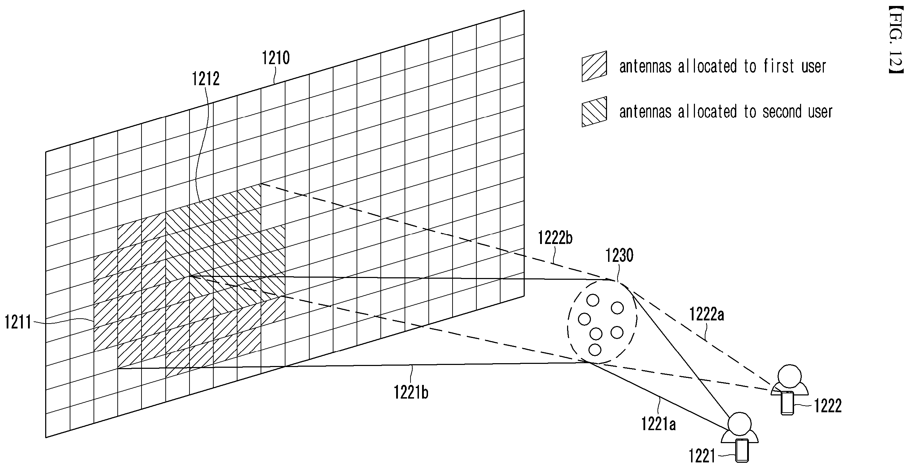

In the present disclosure, a method for dividing a VR based on quality of service (QoS) requirements of the new UE and the UE in communication is described. However, this is merely one exemplary embodiment, and factors other than QoS may be independently or jointly considered. When a VR is divided between the UE in communication and the new UE in a base station having an XL-MIMO antenna based on the present disclosure, a form as shown in FIG. 12 may be obtained.

FIG. 12 is a conceptual diagram illustrating a case in which a base station having an XL-MIMO antenna system divides a VR between a UE in communication and a new UE.

As shown in FIG. 12, an XL-MIMO antenna 1210 included in a base station (not shown in FIG. 12) is illustrated. A first UE 1221 may be a UE in communication with the base station as described above in FIG. 9. A scatterer 1230 may exist between the first UE 1221 and the XL-MIMO antenna 1210. The scatterer 1230 may not be an essential component for communication between the first UE 1221 and the XL-MIMO antenna 1210. A comparison between FIG. 9 and FIG. 12 is as follows.

With respect to VR 911 allocated to the first UE 921 in FIG. 9, in FIG. 12, the base station may divide the VR and allocate portions of the VR to the first UE 1221 and a second UE 1222 based on QoS requirements. Accordingly, the VR 911 allocated to the first UE 921 in FIG. 9 may include a first VR 1211 allocated to the first UE 1221 and a second VR 1212 allocated to the second UE 1222 in FIG. 12. The first UE 1221 and the second UE 1222 illustrate a case in which channels are formed with the XL-MIMO antenna through the same scatterer 1230.

The first VR 1211 of the XL-MIMO antenna 1210 may form a channel with the first UE 1221 through the scatterer 1230. In FIG. 12, a channel 1221b between the first VR 1211 and the scatterer 1230 and a channel 1221a between the scatterer 1230 and the first UE 1221 are illustrated as solid lines, and a channel 1222b between the second VR 1212 and the scatterer 1230 and a channel 1222a between the scatterer 1230 and the second UE 1222 are illustrated as dashed lines.

Hereinafter, a method for allocating VRs to the first UE 1221 and the second UE 1222 as shown in FIG. 12 is described.

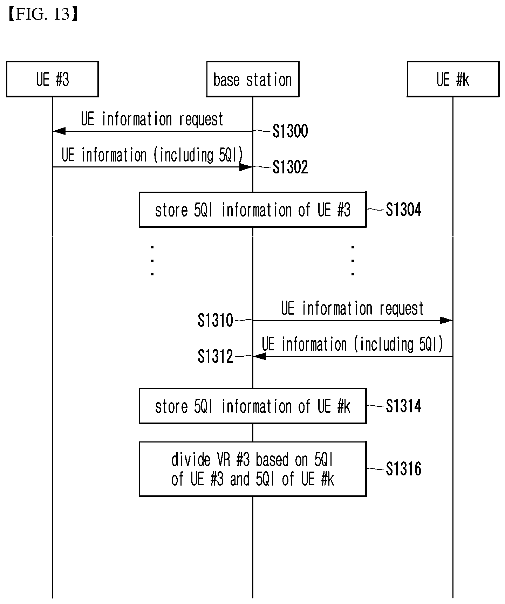

FIG. 13 is a sequence diagram illustrating an operation in which a base station having an XL-MIMO antenna system receives QoS requirements from UEs.

Before describing FIG. 13, it is assumed that VR #3 allocated to UE #3 is an optimal VR for a new UE based on the description of Section (1). Accordingly, the UE in communication is assumed to be UE #3. In addition, the new UE performing initial access is assumed to be UE #k.

In step S1300, the base station may transmit a UE information request message to UE #3. In the present disclosure, the UE information request message may include a field requesting QoS information. Accordingly, UE #3 may receive the UE information request message including a field requesting QoS information for a flow associated with communication with the base station in step S1300.

In step S1302, UE #3 may generate a UE information message in response to the UE information request message received from the base station, and may transmit the generated UE information message to the base station. The UE information message may include QoS information, for example, a 5G QoS Identifier (5QI). The 5QI may be information mapped to at least one of a resource type, a priority level, a packet delay budget, a packet error rate, a maximum data burst volume, or a data rate requirement. Here, the packet delay budget may refer to a latency requirement, and the resource type may be divided into a guaranteed bit rate (GBR) scheme and a non-guaranteed bit rate (non-GBR) scheme.

In step S1302, the base station may receive the UE information message from UE #3. In addition, in step S1304, the base station may store UE information received from UE #3.

Steps S1300, S1302, and S1304 described above may be procedures performed in advance when UE #3 starts communication. Accordingly, a procedure for allocating a VR to UE #3 may be performed thereafter.

In addition, when a new UE (i.e. UE #k) performs initial access and a VR used by UE #3 is an optimal VR for UE #k through the procedure of Section (1), the base station may need to determine QoS requirements of UE #k. Accordingly, the base station may transmit a UE information request message to UE #k in step S1310. As described above, the UE information request message may include a field requesting QoS information. Accordingly, UE #k may receive the UE information request message in step S1310.

In step S1312, UE #k may generate a UE information message in response to the UE information request message received from the base station, and may transmit the UE information message to the base station. The UE information message may include QoS information such as 5QI as described above.

In step S1312, the base station may receive the UE information message from UE #k. In addition, in step S1314, the base station may store the UE information received from UE #k. Through the above procedure, QoS information received from UE #3 and QoS information received from UE #k may be shown in Table 4 below.

**[Table 4]**

| | Priority level | Data rate requirement (guaranteed bit rate, Kbps) | Latency requirement (packet delay budget, ms) |
|---|---|---|---|
| UE #3 | 20 | 500 | 150 |
| UE #k | 40 | 300 | 200 |

Table 4 illustrates a case including only a priority level, a data rate requirement, and a latency requirement among 5QI. However, as described above, the 5QI may be mapped based on additional parameters. Accordingly, QoS information received from each of the UEs, for example, a packet error loss rate (PELR), a maximum data burst volume, and the like may be jointly considered. However, in the present disclosure, only QoS information shown in Table 4 is used for convenience of description. In addition, a priority level of each of the UEs may be additionally used when QoS requirements of a specific UE cannot be satisfied. Accordingly, when the UE maintains communication, the QoS requirements may be maintained.

In step S1316, the base station may divide VR #3 based on the 5QI of UE #3 and UE #k, as shown in Table 4. An example of a number of antennas before VR #3 is divided and a case in which VR #3 is allocated to UE #3 and UE #k may be exemplified as shown in Table 5 below.

**[Table 5]**

| | | | |
|---|---|---|---|
| | Antennas included in VR | Number of antennas | VR index |
| Antennas of VR #3 before division | #1, A #2, ..., A #256 | 256 | VR #3 |
| Antennas allocated to UE #3 after division | A #1, A #2, ..., A #160 | 160 | VR #3 |
| Antennas allocated to UE #k after division | #161, A #162, ..., A #256 | 96 | VR #k |

Table 5 exemplifies a case in which the base station simply divides VR #3 based on the number of antennas and QoS requirements received from UEs as described above in Table 4. A scheme of determining a number of antennas to be allocated to UE #3 and UE #k may be determined based on QoS requirements as follows. As exemplified in Table 5 above, VR #3 allocated to UE #3 may correspond to a case in which a total of 256 antennas are allocated. In addition, a data rate requirement may be 500 Kbps in the case of UE #3 and 300 Kbps in the case of UE #k as exemplified in Table 4. Accordingly, when dividing antennas of VR #3 to UE #3 and UE #k, a number of antennas to be allocated to UE #3 may be determined based on the data rate requirement of UE #3 as shown in Equation 1 below, and a number of antennas to be allocated to UE #k may be determined based on the data rate requirement of UE #k as shown in Equation 2 below. $The number of antennas allocated to UE # 3 = \frac{{r}_{1}}{{r}_{1} + {r}_{2}} \times n$ $The number of antennas allocated to UE # k = \frac{{r}_{2}}{{r}_{1} + {r}_{2}} \times n$

In Equation 1 and Equation 2, *r*₁ may denote the data rate requirement of UE #3, *r*₂ may denote the data rate requirement of UE #k, and *n* may indicate the total number of antennas allocated to VR #3.

Based on Equation 1 exemplified above, it may be identified that the number of antennas allocated to UE #3 may be 160, and based on Equation 2, it may be identified that the number of antennas allocated to UE #k may be 96.

In Equation 1 and Equation 2 above, only the number of antennas may be determined. Accordingly, the base station may need to determine an antenna region to be reallocated to UE #3 and may need to determine an antenna region to be reallocated to UE #k.

In the method for determining the number of antennas described above, only the data rate requirement (e.g. GBR) is considered. However, the number of antennas to be allocated to UE #3 and UE #k in VR #3 may be determined by comprehensively considering additional QoS requirements such as a latency requirement or a priority in addition to GBR.

In addition, the present disclosure assumes division of antennas based on the number of antennas. However, another method may be used. For example, the base station may divide VR #3 into a predetermined number of groups. In addition, the base station may select a representative antenna for each group and may divide VR #3 into groups and allocate the groups based on the number of representative antennas determined according to data rate requirements of UE #3 and UE #k. In this case, antennas belonging to the same group as the representative antenna may be allocated to the same UE as the representative antenna. When the base station configures and uses representative antennas, since a number of antenna groups and a position of the representative antenna are implementation-specific, a detailed description of a specific method is omitted in the present disclosure.

Meanwhile, in the example of FIG. 12 described above, a case in which VR is divided into two sub-VRs such that each sub-VR becomes a continuous antenna region is exemplified. However, antenna regions included in each sub-VR may be discontinuously divided. Such discontinuous division is also an implementation-specific issue of the base station, and thus a detailed description of a specific method is omitted in the present disclosure.

Even when VR #3 is divided and antennas allocated to UE #3 and UE #k are used, it is necessary to check whether a data rate is satisfied. In other words, although the number of antennas is appropriately divided, in order to determine which antenna region needs to be selected, the base station may need to perform an additional procedure. An additional procedure for dividing VR #3 is further described below.

Meanwhile, in the above description, a case is assumed in which QoS requirements are transmitted by using a UE information request message. However, QoS requirements may be transmitted by a method other than the UE information request message. For example, a UE intending to perform communication may transmit its QoS requirement information to the base station by using uplink control information (UCI). As another example, a UE intending to perform communication may transmit its QoS requirement information during a RACH procedure. As another example, a UE intending to perform communication may transmit its QoS requirement information to the base station by using a UE assistance information message or a newly defined RRC message enabling the UE to transmit QoS information to the base station.

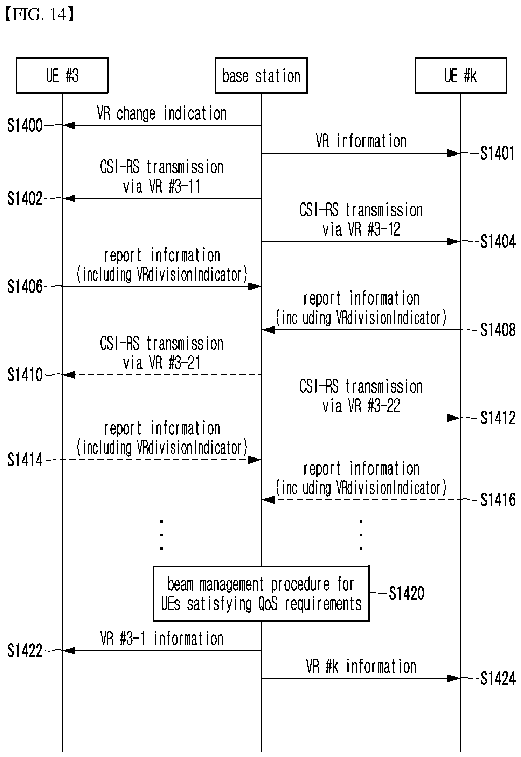

FIG. 14 is a sequence diagram illustrating an operation in which a base station having an XL-MIMO antenna system divides VR #3 among UEs.

Before the operation described in FIG. 14, a number of antennas to be allocated to UE #3 and UE #k may be determined according to the procedure of FIG. 13. For example, as described above, it is assumed that 160 antennas in VR #3 are allocated to UE #3 and 96 antennas in VR #3 are allocated to UE #k. In addition, the base station may preconfigure candidate sets of antenna arrangement regions for the 160 antennas allocated to UE #3 and may preconfigure candidate sets of antenna arrangement regions for the 96 antennas allocated to UE #k.

In step S1400, the base station may transmit a VR change indication message to UE #3. The VR change indication message may indicate that the number of antennas allocated to UE #3 has changed. The VR change indication message may include information on candidate sets of antenna arrangement regions or sequence indices of antenna arrangement regions as described above. It is assumed that VR #3 includes 256 antennas as described above, the number of antennas to be allocated to UE #3 is 160, and the number of antennas to be allocated to UE #k is 96. Accordingly, when 160 antennas to be allocated to UE #3 are determined, antennas to be allocated to UE #k may be automatically determined. Hereinafter, antenna indices allocated to UE #3 are denoted as VR #3-11, VR #3-21, VR #3-31, etc., and antenna indices allocated to UE #k are denoted as VR #3-12, VR #3-22, VR #3-32, etc.

In addition, the VR change indication message may indicate a reporting request for CSI-RS transmitted through the changed VR region and may indicate a reporting scheme. The reporting scheme may indicate whether to report the RSRP value for the measured CSI-RS, only a VR division indicator (i.e. *VRdivisionIndicator*), or both the RSRP value for the measured CSI-RS and the VR division indicator.

In addition, when a plurality of RSRP thresholds are configured for UE #3, the VR change indication message may indicate which RSRP threshold is to be used. The VR change indication message may be implemented as a newly defined RRC reconfiguration message, a MAC-CE, or DCI.

In step S1401, the base station may transmit a VR information message to UE #k. The VR information message may include substantially the same information as the VR change indication message. However, since UE #k does not have a previously allocated VR, information indicating changes in the number or range of allocated antennas may be excluded. As another example, UE #k may be informed that a VR different from the initially allocated VR is configured or that the number or range of antennas of the initially allocated VR is changed.

Step S1400 and step S1401 may be performed simultaneously, or step S1401 may be performed first and step S1400 may be performed later.

In step S1402, the base station may transmit a CSI-RS to UE #3 by using VR #3-11. In step S1402, UE #3 may receive the CSI-RS transmitted by the base station and may measure the received CSI-RS. The CSI-RS may be transmitted through VR #3-11.

In step S1406, UE #3 may transmit report information including a CSI-RS measurement result to the base station based on the reporting scheme indicated in step S1400. In the example of FIG. 14, the report information may include a VR division indicator. The VR division indicator may be configured as a one-bit indicator. For example, when a result of measuring the received CSI-RS is suitable for communication, UE #3 may set the value of the VR division indicator to '1', and when the result of measuring the received CSI-RS is not suitable for communication, UE #3 may set the value of the VR division indicator to '0'. A reason why the VR division indicator can be set as one bit is that an optimal beamforming vector for VR #3 is already known based on UE #3 as described above.

Since the present disclosure provides a procedure for checking whether a data rate requirement is satisfied, UE #3 may identify a corresponding data rate value based on a conversion table mapping RSRP values to data rates based on the RSRP value measured for the received CSI-RS. For example, UE #3 may have a data rate requirement and a data rate measured by the CSI-RS as shown in Table 6.

**[Table 6]**

| Data rate requirement (Kbps) | Converted data rate at UE #3 (Kbps) |
|---|---|
| 300 | 270 |

Table 6 shows an example in which a data rate requirement is 300 Kbps, while a data rate obtained by converting the RSRP value measured for the CSI-RS received through VR #3-11 is 270 Kbps. Accordingly, UE #3 may not satisfy the data rate requirement when using VR #3-11. In this case, UE #3 may transmit report information to the base station indicating that VR #3-11 is not suitable. In other words, UE #3 may transmit the report information to the base station by setting the VR division indicator value to '0'. Meanwhile, in step S1404, the base station may transmit a CSI-RS to UE #k by using VR #3-12. In step S1404, UE #k may receive the CSI-RS transmitted by the base station and may measure the received CSI-RS. In this case, the CSI-RS may be transmitted through VR #3-12.

In step S1408, UE #k may transmit report information including a CSI-RS measurement result to the base station based on the reporting scheme indicated in step S1401. When the CSI-RS measurement result is suitable for communication, UE #k may set the value of the VR division indicator to '1', and when the CSI-RS measurement result is not suitable for communication, UE #k may set the value of the VR division indicator to '0'. In addition, the report information may include data rate information of UE #k.

As described above, since the present disclosure provides a procedure for checking whether a data rate requirement is satisfied, UE #k may identify a corresponding data rate value based on the conversion table mapping RSRP values to data rates based on the RSRP value measured for the received CSI-RS. UE #k may have a data rate requirement and a data rate measured by the CSI-RS as shown in Table 7.

**[Table 7]**

| Data rate requirement (Kbps) | Converted data rate at UE #k (Kbps) |
|---|---|
| 200 | 220 |

Table 7 shows an example in which a data rate requirement is 200 Kbps, while a data rate obtained by converting the RSRP value measured for the CSI-RS received through VR #3-12 is 220 Kbps. Accordingly, when using VR #3-12, UE #k may satisfy the data rate requirement. Accordingly, UE #k may transmit report information to the base station including information indicating that VR #3-12 is suitable. In other words, UE #k may transmit the report information to the base station by setting the value of the VR division indicator to '1'. The base station may receive report information from UE #3 and UE #k in step S1406 and step S1408, respectively. In addition, the base station may determine whether additional VR review is required based on the received report information.

When VR division indicators received from UE #3 and UE #k are both set to '1', the base station may not perform steps S1410 to S1416. On the other hand, when VR division indicators received from UE #3 and UE #k are both set to '0', steps S1410 to S1416 may be performed.

Meanwhile, when a VR division indicator from only one UE of UE #3 and UE #k is set to '0', a VR region expansion method described in Section (3) may be used.

In addition, in step S1402 or step S1404, only a case in which one CSI-RS is transmitted is exemplified. However, when necessary, two or more CSI-RSs may be transmitted. In addition, CSI-RS may be transmitted to UE #3 by using only one beam, and CSI-RS may be transmitted to UE #k by using a plurality of beams. In addition, when the VR is divided by using representative antennas for respective groups as described above, the CSI-RS may be transmitted by using only the representative antennas.

Steps S1410 to S1416 may be the same procedure as steps S1402 to S1408 described above. However, in steps S1402 to S1408, VR #3-11 may be allocated to UE #3 and VR #3-12 may be allocated to UE #k, whereas in steps S1410 to S1416, VR #3-21 may be allocated to UE #3 and VR #3-22 may be allocated to UE #k.

Such a procedure may be repeated for a number of preconfigured candidate VR allocations, and when at least one UE satisfies the allocated VR region, the procedure of Section (3) may be performed. On the other hand, when none of the UEs can satisfy communication requirements using VR #3, a procedure for allocating a new VR to UE #k may be performed.

When at least one UE satisfies the allocated VR region, the base station may perform a beam management procedure for UEs satisfying QoS requirements in step S1420. In the beam management procedure, the base station may transmit a message allocating a VR to a UE satisfying the allocated VR region. In addition, in the beam management procedure, the base station may further transmit VR allocation information allocating an additional VR described in Section (3) to a UE that does not satisfy the allocated VR region. In addition, the base station may transmit a measurement report control message to a UE satisfying the allocated VR region after transmitting the VR allocation message.

In step S1422, the base station may transmit information on VR #3-1 to UE #3. Accordingly, UE #3 may receive the information on VR #3-1 from the base station in step S1422. In this case, VR #3-1 may be a VR that satisfies QoS requirements of UE #3, or may be a VR that does not satisfy QoS requirements of UE #3. When VR #3-1 does not satisfy QoS requirements of UE #3, allocation of additional antennas may be performed through the procedure of Section (3).

In step S1424, the base station may transmit information on VR #k to UE #k. Accordingly, UE #k may receive the information on VR #k from the base station in step S1424. In this case, VR #k may be a VR that satisfies QoS requirements of UE #k, or may be a VR that does not satisfy QoS requirements of UE #k. When VR #k does not satisfy QoS requirements of UE #k, allocation of additional antennas may be performed through the procedure of Section (3).

However, at least one of VR #3-1 or VR #k transmitted in step S1422 or step S1424 may satisfy QoS requirements of at least one UE.

### (3) Method for expanding a VR in a base station using an XL-MIMO system

In Section (1) described above, the procedure for selecting the closest UE among UEs in communication based on a position of a new UE is described. Based on Section (1), the new UE may share a VR of the selected UE. When the new UE and the UE in communication cannot share the same VR, the method for dividing the VR is described in Section (2). In Section (2), as an exemplary embodiment, the method for dividing a VR based on QoS requirements of a new UE and requirements of a UE in communication has been described. When a VR of a UE in communication is divided and allocated to the new UE, QoS requirements may not be satisfied for at least one UE among the new UE and the UE in communication. A method for expanding a VR for a UE whose QoS requirements are not satisfied is described below.

In the present disclosure described below, after a base station having an XL-MIMO system divides a VR of a UE in communication for the new UE, the base station may additionally allocate a VR candidate or an antenna region around the VR to a UE that does not satisfy QoS requirements. The base station may update the VR so that the UE satisfies QoS requirements by additionally allocating the VR candidate or the antenna region around the VR to the UE that does not satisfy QoS requirements.

In the VR expansion procedure, the base station may perform a VR expansion method for a case in which a UE that does not satisfy QoS requirements is a UE in communication with the base station and a VR expansion method for a new UE differently. Here, the VR expansion method may refer to an antenna region search procedure.

First, when a UE in communication does not satisfy QoS requirements after VR division, the base station may additionally allocate a VR to the UE in communication by using information on VR candidates when allocating the VR of the UE in communication. The information on VR candidates may be stored in advance by the base station or may be stored by the UE in communication. When the information on VR candidates is stored by the UE in communication, the base station may obtain the information on VR candidates by requesting it from the UE in communication and receiving it from the UE in communication.

When two or more VR candidates belong to the VR candidates during VR allocation for the UE in communication, the base station may determine a VR candidate to be additionally allocated. The VR candidate may be an antenna region in which a high RSRP is measured although the VR candidate is not selected as the VR of the UE in communication. Accordingly, when expanding the VR for the UE in communication, the base station may expand the VR based on the VR candidate information. In other words, the base station may expand the VR by additionally allocating VR candidate antennas so as to satisfy QoS requirements of the UE in communication.

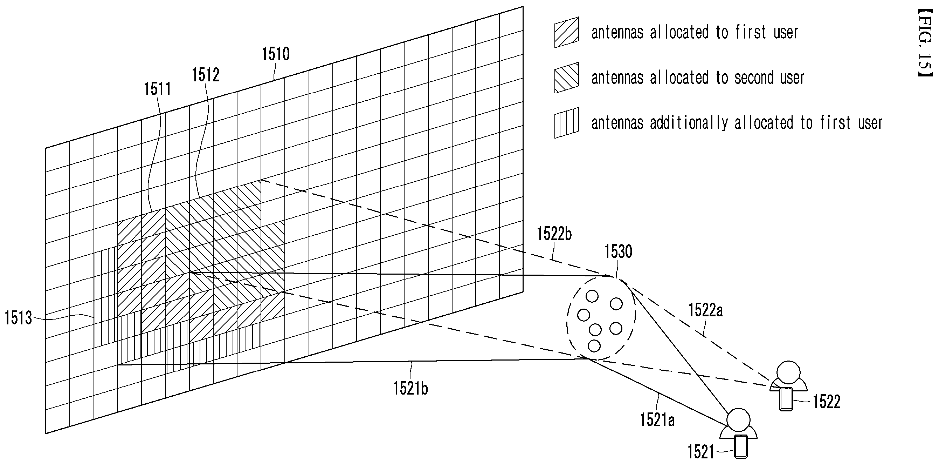

FIG. 15 is a conceptual diagram illustrating a case in which a base station having an XL-MIMO antenna system expands a VR of a UE in communication.

As shown in FIG. 15, an XL-MIMO antenna 1510 included in a base station (not shown in FIG. 15) is illustrated. A first UE 1521 may be a UE in communication with the base station as described in FIG. 12. A scatterer 1530 may exist between the first UE 1521 and the XL-MIMO antenna 1510. In FIG. 15, a first VR 1511 is allocated to the first UE 1521 based on QoS requirements, and a second VR 1512 is allocated to a second UE 1522. In the example of FIG. 15, the first UE 1521 has an expanded first VR including additionally allocated antennas 1513 in addition to the first VR 1511. Accordingly, the first UE 1521 has the expanded first VR.

On the other hand, the second VR 1512 divided and allocated to the second UE 1522 may satisfy QoS requirements of the second UE 1522. Accordingly, the second UE 1522 does not have additionally allocated antennas.

Accordingly, the expanded first VR 1511 and 1513 of the XL-MIMO antenna 1510 may form a channel with the first UE 1521 through the scatterer 1530. In FIG. 15, a channel 1521b between the expanded first VR 1511 and 1513 and the scatterer 1530 and a channel 1521a between the scatterer 1530 and the first UE 1521 are illustrated as solid lines, and compared to FIG. 12, it may be visually confirmed that the VR is expanded by the additionally allocated antennas 1513. A channel 1522b between the second VR 1512 and the scatterer 1530 and a channel 1522a between the scatterer 1530 and the second UE 1522 are illustrated as dashed lines.

The above description describes only expansion of the VR of the UE in communication. However, a VR of a new UE may also be expanded. As described in Section (2), since QoS requirements of at least one of a UE in communication or a new UE are not satisfied, there may be a case in which a VR allocated to the new UE does not satisfy QoS requirements required by the new UE. In this case, antennas adjacent to antennas allocated as the VR of the new UE may be additionally allocated. Accordingly, the VR of the new UE may be expanded.

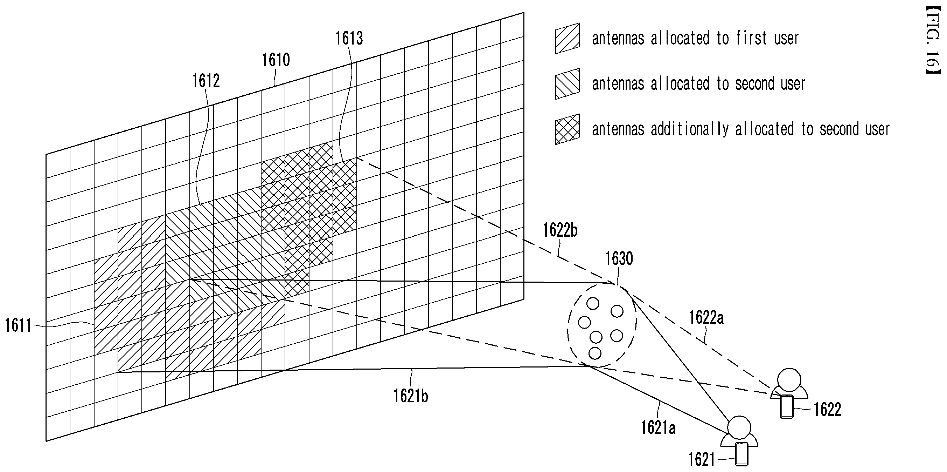

FIG. 16 is a conceptual diagram illustrating a case in which a base station having an XL-MIMO antenna system expands a VR of a new UE.

As shown in FIG. 16, an XL-MIMO antenna 1610 included in a base station (not shown in FIG. 16) is illustrated. A first UE 1621 may be a UE in communication with the base station as described in FIG. 15. A scatterer 1630 may exist between the first UE 1621 and the XL-MIMO antenna 1610. In FIG. 16, a first VR 1611 is allocated to the first UE 1621 based on QoS requirements, and a second VR 1612 is allocated to a second UE 1622. In the example of FIG. 16, the second UE 1622 has an expanded second VR including additionally allocated antennas 1613 in addition to the second VR 1512. Accordingly, the second UE 1622 has the expanded second VR.

On the other hand, the first VR 1611 divided and allocated to the first UE 1621 may satisfy QoS requirements required of the first UE 1621. Accordingly, the first UE 1621 does not have additionally allocated antennas.

Accordingly, an expanded second VR 1612 and 1613 of the XL-MIMO antenna 1610 may form a channel with the second UE 1622 through the scatterer 1630. In FIG. 16, a channel 1622b between the expanded second VR 1612 and 1613 and the scatterer 1630 and a channel 1622a between the scatterer 1630 and the second UE 1622 are illustrated as dashed lines. A channel 1621b between the first VR 1611 and the scatterer 1630 and a channel 1621a between the scatterer 1630 and the first UE 1621 are illustrated as solid lines.

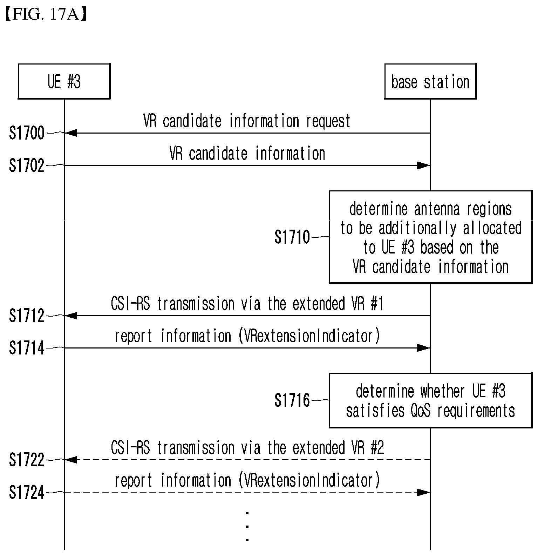

FIG. 17A is a sequence diagram illustrating an operation in which a base station having an XL-MIMO antenna system additionally allocates a VR to UE #3.

In FIG. 17A, a procedure for additionally allocating antennas to a VR of a UE in communication when QoS requirements of the UE are not satisfied is mainly described. In addition, in describing FIG. 17A, as described in Section (2), it is assumed that the UE in communication is UE #3, and the new UE is UE #k.

In step S1700, the base station may transmit a VR candidate information request message to UE #3, which is in communication. The VR candidate information request message may be a newly defined message according to the present disclosure. In 5G NR, a UE information request message may be used as the VR candidate information request message. Accordingly, UE #3 which is in communication may receive the VR candidate information request message from the base station in step S1700.

In step S1702, UE #3 may generate a VR candidate information message in response to the VR candidate information request message. UE #3 may transmit the VR candidate information message to the base station. When the VR candidate information request message is a UE information request message, the VR candidate information message may be a UE information response message. The VR candidate information may include one or more VR candidates. When the VR candidate information includes two or more VR candidates, UE #3 may list the VR candidates in an order of priority.

The base station may receive the VR candidate information message from UE #3 in step S1702. When three VR candidates are included in the VR candidate information message, the base station may receive information as shown in Table 8 below.

**[Table 8]**

| VR candidate | Antennas included in VR | Number of antennas included in VR |
|---|---|---|
| VR candidate #1 | A #257, ..., A #384 | 128 |
| VR candidate #2 | A #385, ..., A #512 | 128 |
| VR candidate #3 | A #513, ..., A #640 | 128 |

When the base station stores and manages VR candidates of UEs in communication, step S1700 and step S1702 may not be performed. In the present disclosure, an exemplary embodiment is assumed in which the UE stores and manages VR candidates. In the exemplary embodiment of the present disclosure, VR candidate information may be stored by UE #3 in one of the following two cases. First, when UE #3 is allocated a VR for supporting itself by using a VR allocation technique considering an electromagnetic region in the XL-MIMO system, UE #3 may store, as VR candidates, top several antenna regions with high received signal measurements among antennas that are not configured as VRs.

Second, when a VR for UE #3 is allocated based on a VR of another terminal as described in the present disclosure, UE #3 may store and manage remaining regions of the VR used as a reference when the VR of UE #3 is allocated as VR candidate information.

In step S1710, when the base station acquires VR candidate information as shown in Table 8, the base station may determine a first VR candidate based on the VR candidate information. As described above, VR candidates in Table 8 may be candidates arranged in order of priority. In other words, VR candidate #1 may have the highest priority, VR candidate #2 may have the next highest priority, and VR candidate #3 may have the lowest priority. Accordingly, the base station may determine an order for additionally allocating antenna regions in accordance with the priority of VR candidates, such as VR candidate #1, VR candidate #2, and VR candidate #3. In addition, at this time, the base station may also check whether each of VR candidate #1, VR candidate #2, and VR candidate #3 can be allocated to UE #3. For example, the base station may check whether antennas of VR candidate #1 are already allocated to another UE to determine whether VR candidate #1 can be allocated to UE #3. When VR candidate #1 is already allocated to another UE, the base station may check whether VR candidate #2 can be allocated to UE #3. In the present disclosure, for convenience of description, it is assumed that all VR candidates can be allocated to UE #3.

In step S1712, the base station may transmit a CSI-RS to UE #3 by using an expanded VR obtained by adding VR candidate #1 to divided VR #3 as described above in Section (2). At this time, the CSI-RS may be transmitted using all antennas of the divided VR #3 and VR candidate #1. As another example, the CSI-RS may be transmitted only through representative antennas among antennas of the divided VR #3 and VR candidate #1. The present disclosure is not limited to either of the two methods.

In addition, the number of beams for transmitting the CSI-RS may be one or more. In other words, the base station may transmit the CSI-RS to UE #3 using a single beam. As another example, the base station may transmit the CSI-RS to UE #3 using multiple beams. In the present disclosure, since a position of UE #3 is known, UE #3 may measure the CSI-RS even when only one beam is transmitted. Accordingly, a method using one beam may be used. However, when attempting to find a more precise beam based on VR division, the CSI-RS may be transmitted through a plurality of beams. Accordingly, UE #3 may receive the CSI-RS through the expanded VR from the base station in step S1712.

In step S1714, UE #3 may measure an RSRP value of the CSI-RS received through the expanded VR. UE #3 may check whether a data rate requirement is satisfied based on a measurement result of the RSRP of the CSI-RS received through the expanded VR. In step S1714, UE #3 may transmit a report message including information indicating the checking result to the base station.

In the present disclosure, a method for allocating a VR based on a data rate among QoS parameters provided to the UE is described. Accordingly, even when a VR is additionally allocated, whether to additionally allocate the VR to the UE may be determined based on a data rate among QoS. Accordingly, as described above, UE #3 may have a table mapping RSRP values to data rates. UE #3 may check whether the RSRP value of the measured CSI-RS satisfies the data rate requirement by using the table mapping RSRP values to data rates. A data rate according to QoS requirements of UE #3 may be 300 Kbps as exemplified above in Table 6.

When a data rate obtained through a mapping table between the RSRP value of the CSI-RS received through the expanded VR and a data rate is 410 Kbps, a comparison with the case before allocating VR candidate #1 is shown in Table 9 below.

**[Table 9]**

| | Antenna indices | Number of antennas | Data rate (Kbps) |
|---|---|---|---|
| Before additional antenna allocation | A #1, A #2, ..., A #16C | 160 | 270 |
| After additional antenna allocation | A #1, A #2, ..., A #160, A #257, ..., A #384 | 288 | 410 |

As shown in Table 9, before antennas are additionally allocated, the data rate of UE #3 is 270 Kbps, but after antennas are additionally allocated, the data rate of UE #3 may increase to 410 Kbps. Accordingly, a report message transmitted by UE #3 in step S1714 may include data rate information or may include a one-bit suitability report. In the present disclosure, the one-bit suitability reporting information may be a VR extension indicator. The VR extension indicator may be configured during RRC configuration of UE #3, during RRC reconfiguration, or through a VR candidate information request message. When QoS requirements of UE #3 are satisfied, the VR extension indicator may be set to '1', and when QoS requirements of UE #3 is not satisfied, the VR extension indicator may be set to '0'. A reason why UE #3 can transmit only the VR extension indicator configured as one bit as a measurement report for the CSI-RS is that, since VR #3 before division is a VR used for communication by UE #3, a same beamforming vector may be used for adjacent antenna regions. When the same beamforming vector cannot be used, UE #3 may need to additionally transmit additional information for beamforming. The additional information may be included in the report message. The additional information may include at least one of a precoding matrix indicator (PMI), a rank indicator (RI), or a channel quality indicator (CQI).

In step S1714, the base station may receive the report message from UE #3. In addition, in step S1716, the base station may determine whether QoS requirements of UE #3 are satisfied based on the received report message. In the exemplary embodiment described above, when VR candidate #1 is additionally allocated to the divided VR of UE #3, QoS requirements of UE #3 may be satisfied. When QoS requirements of UE #3 are satisfied as described above, steps S1722 and S1724 may not be performed.

On the other hand, when QoS requirements of by UE #3 are not satisfied, the base station may perform step S1722 and step S1724. Step S1722 may be the same procedure as step S1712. However, the difference is that, in step S1712, VR candidate #1 is additionally allocated to the divided VR of UE #3, whereas, in step S1722, VR candidate #2 is additionally allocated to the divided VR of UE #3. In addition, step S1724 may be the same procedure as step S1714 described above. Accordingly, repeated description of the same content is omitted.

Meanwhile, even when the number of VR candidates for UE #3 is two or more, the above-described procedure may be performed for only one VR candidate according to a latency requirement, or the above-described procedures may be performed only for two VR candidates. In order to satisfy the latency requirement, a procedure for checking VR candidates by using a timer based on the latency requirement may be performed. In other words, the base station may operate a timer based on the latency requirement during a procedure for checking VR candidates for VR expansion among VR candidates. In addition, while the timer according to the latency requirement is operating, the base station may perform a procedure of additionally allocating the VR candidate to UE #3 to determine whether QoS is satisfied. When the latency requirement timer expires during the procedure for additionally allocating the VR candidate, the VR additional allocation procedure may be terminated.

When the VR additional allocation procedure is terminated in a state in which VR additional allocation is not performed for UE #3 in communication, the base station may allow UE #3 to communicate using the existing VR without performing VR division for UE #3. In addition, for UE #k, which is a new UE, the base station may perform a procedure for selecting a VR based on the entire XL-MIMO antenna or the position of UE #k. As another example, when a priority of UE #k, which is a new UE, is much higher than that of UE #3, the base station may instruct UE #3 to perform handover, and may perform communication by allocating, to UE #k, a divided VR or a VR allocated to UE #3.

In addition, when QoS requirements of UE #3 are satisfied through VR expansion through the above procedure, all procedures according to the present disclosure may be completed. In other words, the base station may communicate with UE #3 by using a VR determined through VR expansion, and may communicate with UE #k, which is a new UE, by using a VR determined through VR division.

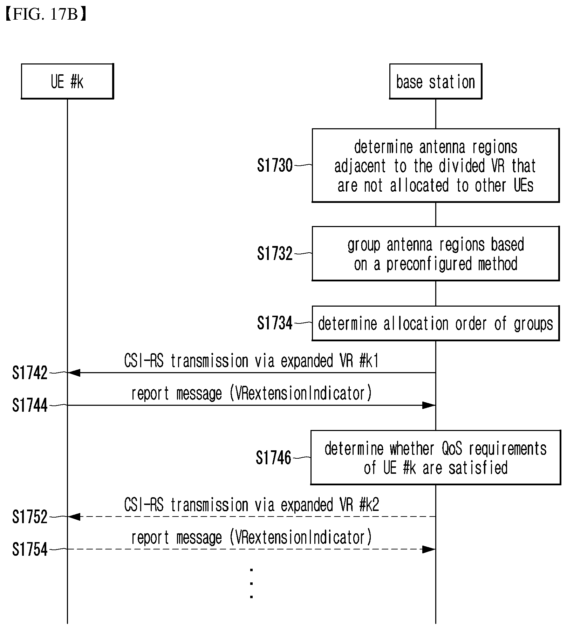

FIG. 17B is a sequence diagram illustrating an operation in which a base station having an XL-MIMO antenna system additionally allocates a VR to UE #k.

In FIG. 17B, a procedure for additionally allocating antennas to a VR of a new UE when QoS requirements of the new UE are not satisfied is mainly described. In addition, in describing FIG. 17B, as described in Section (2), it is assumed that the UE in communication is UE #3, and the new UE is UE #k.

In step S1730, the base station may determine antenna regions that are not allocated to other UEs among antennas adjacent to a VR divided and allocated to UE #k, which is the new UE. A case in which step S1730 is performed may correspond to a case in which, as described above, the VR divided and allocated to UE #k does not satisfy QoS requirements of UE #k. In the present disclosure, although description is given using a data rate as one of QoS, other parameters of QoS may be used alone, or the data rate and other QoS parameters may be considered together.

In step S1732, the base station may group the antenna regions based on a preconfigured method. Although various methods may be used as the preconfigured method, in the present disclosure, for ease of understanding and convenience of description, a case of grouping adjacent antennas is assumed. Accordingly, the base station may group antennas in units of a preconfigured number in the antenna regions adjacent to a VR divided from the VR of UE #3 and allocated to UE #k and not used by another UE.

In step S1734, the base station may determine an order of antenna groups to be additionally allocated among the determined groups. For example, when candidate groups exist as candidate group #1, candidate group #2, candidate group #3, etc., the base station may determine an order in which antennas are sequentially additionally allocated starting from which candidate group.

In step S1742, the base station may transmit a CSI-RS to UE #k by using an expanded VR obtained by adding candidate group #1 to the divided VR #k of UE #k as described in Section (2). At this time, the CSI-RS may be transmitted by using all antennas of divided VR #k and candidate group #1. As another example, the CSI-RS may be transmitted only through representative antennas among antennas of divided VR #k and candidate group #1. The present disclosure is not limited to either of the two methods.

In addition, the number of beams for transmitting the CSI-RS may be one or more. In other words, the base station may transmit the CSI-RS to UE #k using a single beam. As another example, the base station may transmit the CSI-RS to UE #k using multiple beams. In the present disclosure, since an approximate position or an exact position of UE #k is known, UE #k may measure the CSI-RS even when only one beam is transmitted. Accordingly, a method using one beam may be used. However, when attempting to find a more precise beam, the CSI-RS may be transmitted through multiple beams. Accordingly, UE #k may receive the CSI-RS through the expanded VR from the base station in step S1742.

In step S1744, UE #k may measure an RSRP value of the CSI-RS received through the expanded VR. UE #k may determine whether a data rate requirement is satisfied based on a measurement result of the RSRP of the CSI-RS received through the expanded VR. In step S1744, UE #k may transmit, to the base station, a report message including information indicating the determination result.

In the present disclosure, a method for allocating a VR based on a data rate among QoS parameters provided to the UE is described. Accordingly, even when a VR is additionally allocated, whether the VR needs to be additionally allocated to the UE may be determined based on the data rate among QoS parameters. Accordingly, as described above, UE #k may have a table mapping RSRP values of the CSI-RS to data rates. UE #k may determine whether the RSRP value of the measured CSI-RS satisfies the data rate requirement by using the table mapping RSRP values of the CSI-RS to data rates. A data rate requirement according to QoS of UE #k may be 200 Kbps as exemplified above in Table 7. In addition, unlike the case described in Table 7, it is assumed that, when communication is performed by using VR #k allocated to UE #k through VR division, the data rate is 180 Kbps.

When the data rate obtained through the RSRP value of the CSI-RS received through the expanded VR and the data rate mapping table is 260 Kbps, a comparison with the case before allocating candidate group #1 is shown in Table 10.

**[Table 10]**

| | Antenna indices | Number of antennas | Data rate (Kbps) |
|---|---|---|---|
| Before additional antenna allocation | A #161, A #162, ..., A #256 | 96 | 180 |
| After additional antenna allocation | A #161, A #162, ..., A #256, A #641, ..., A #704 | 160 | 260 |

The example of Table 10 assumes a case in which, after an antenna region including antennas indicated as A #641, ..., A #704 is additionally allocated to VR #k, the data rate of UE #k, which is a new UE, is greater than the QoS data rate requirement. In other words, as exemplified in Table 10, before antennas are additionally allocated, a data rate of UE #k is 180 Kbps, but after antennas are additionally allocated, the data rate of UE #k may increase to 260 Kbps. Accordingly, a report message transmitted by UE #k in step S1744 may include data rate information or may include a one-bit suitability report. In the present disclosure, the one-bit suitability report information may be a VR extension indicator. Information on the VR extension indicator may be provided to UE #k via an RRC message in an RRC configuration procedure of UE #k. When QoS requirements of UE #k are satisfied, the VR extension indicator may be set to '1', and when QoS requirements of UE #k are not satisfied, the VR extension indicator may be set to '0'.

A reason why UE #k can configure only the VR extension indicator configured as a one-bit indicator as a measurement report for the CSI-RS and transmit the measurement report to the base station may be that VR #k is a part of a VR used by UE #3 for communication, and the base station knows in advance a beamforming vector for VR #k. In addition, this assumes a case in which the same beamforming vector can also be used for adjacent antennas. Accordingly, when the same beamforming vector cannot be used when adjacent antennas are used, UE #k may further transmit additional information for beamforming to the base station. The additional information may be transmitted by being included in the report message. The additional information may further include at least one of PMI, RI, or CQI, for example.

In step S1744, the base station may receive the report message from UE #k. In addition, in step S1746, the base station may determine whether QoS requirements of UE #k are satisfied based on the received report message. In the exemplary embodiment described above, when candidate group #1 is additionally allocated to VR #k of UE #k, QoS requirements of UE #k may be satisfied. When QoS requirements of UE #k are satisfied as described above, step S1752 and step S1754 may not be performed.

On the other hand, when QoS required by UE #k is not satisfied, the base station may perform step S1752 and step S1754. Step S1752 may be the same procedure as step S1742. However, the difference is that, in step S1742, candidate group #1 is additionally allocated to VR #k of UE #k, whereas, in step S1752, candidate group #2 is additionally allocated to VR #k. In addition, step S1754 may be the same procedure as step S1744 described above. Accordingly, repeated description of the same content is omitted.

Meanwhile, even when the number of candidate groups for UE #k is two or more, the above-described procedure may be performed only for one candidate group or only for two candidate groups according to a latency requirement. In order to satisfy the latency requirement, a procedure for checking candidate groups by setting a separate timer according to the latency requirement may be performed. A description thereof may be the same as described above in FIG. 17A, and thus repeated description is omitted.

One or more of the operations described with reference to FIGS. 1 to 17B may be selectively performed. In addition, the operations described above may be simply combined, partially combined, or extendedly applied.

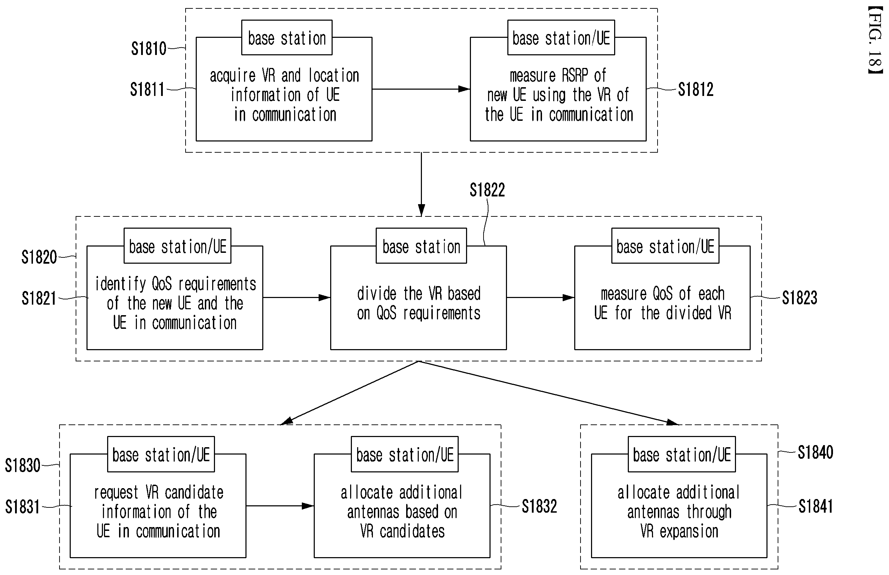

FIG. 18 is a sequence diagram illustrating selection, division, and/or additional allocation of a VR in a base station having an XL-MIMO antenna system and UEs.

As shown in FIG. 18, a procedure may be largely composed of four steps such as step S1810, step S1820, step S1830, and step S1840.

Step S1810 may correspond to a procedure for selecting the UE in communication that is closest to the new UE in order to find a VR to be allocated to the new UE in the XL-MIMO antenna system. More specifically, step S1811 and step S1812 may be performed.

In step S1811, the base station may have VR information of a UE in communication, and may acquire location information of the UE in communication.

The location information of the UE in communication may be information provided from the UE when the UE initially accesses, or may be information provided from the UE moving during communication. As another example, the location information of the UE may be acquired from the UE by the base station inquiring of the UE in communication based on a specific period or event. As another example, the base station may perform a separate procedure for acquiring the location of the UE in communication. For example, the base station may acquire the location of the UE in communication by using a PRS or by using an SRS transmitted by the UE.

The VR allocated to the UE may vary according to a change of the location of the UE. Accordingly, the base station may store VR information that changes according to the location of the UE.

Step S1812 may correspond to a procedure between the base station and the new UE. When the new UE accesses, the base station may acquire location information of the UE by using at least one of the methods described above. In addition, the base station may search for the UE closest to the new UE among UEs in communication. The base station may transmit an RS to the new UE by using a VR allocated to the UE closest to the new UE. The new UE may report, to the base station, an RSRP value obtained by measuring the received RS. Through the above procedure, the base station may determine whether the VR of the UE in communication that is closest to the new UE is suitable for communication of the new UE.

Although not illustrated in FIG. 18, the base station may determine whether the same VR can be allocated to the UE in communication closest to the new UE. For example, when the same VR can be allocated to the new UE and the UE in communication closest to the new UE through one of time division multiplexing, frequency division multiplexing, or code division multiplexing, the base station may allocate the same VR to the new UE and the UE in communication, and may terminate the procedure.

On the other hand, when the same VR cannot be allocated to the UE in communication closest to the new UE, the base station may perform step S1820.

Step S1820 may correspond to a procedure performed when a VR allocated to the UE closest to the new UE is a VR suitable for the new UE and the new UE and the UE in communication cannot share the VR in the XL-MIMO antenna system. Through step S1820, a procedure for dividing and allocating, to the new UE and the UE in communication, the VR used by the UE in communication may be performed. More specifically, step S1821, step S1822, and step S1823 may be performed.

In step S1821, the base station may identify QoS requirements of both the new UE and the UE in communication. The UE in communication may be the UE closest to the new UE selected in step S1810 or may be a UE to which a VR common with the new UE is to be allocated. When the base station stores in advance QoS requirements of each of the new UE and the UE in communication, a special procedure may not be required. When the QoS requirements of both the new UE and the UE in communication need to be received from a core network, the base station may inquire with the core network about the QoS requirements of both the new UE and the UE in communication and may acquire the QoS requirements. When the QoS requirements of both the new UE and the UE in communication need to be obtained from each UE, the base station may request and obtain the QoS requirements from each of the new UE and the UE in communication. When the base station needs to obtain QoS requirements from each UE, QoS requirements of the UE in communication may already be stored at the base station.

In step S1822, the base station may divide the VR based on QoS requirements. The VR may correspond to the VR allocated to the UE closest to the new UE or a UE sharing a common VR with the new UE. A VR division scheme using a data rate may divide the VR based on Equation 1 and Equation 2 described above.

In step S1823, the base station may measure QoS of each UE for the divided VR. The QoS may have various parameters, and, at this time, the parameter used in step S1822 may be used. However, when a latency requirement is not a QoS parameter used in step S1822, the latency requirement may be additionally considered. When, as a result of step S1823, both the new UE and the UE in communication satisfy QoS requirements even when using the divided VR, the base station may perform communication with the new UE by using the divided and allocated VR, and the base station may perform communication with the UE in communication through the divided and allocated VR. On the other hand, when at least one UE uses the divided VR, a case may occur in which QoS requirements are not satisfied. In this case, the base station may perform step S1830.

Step S1830 may correspond to a procedure performed when the VR of the UE in communication is divided and allocated to each of the new UE and the UE in communication in the XL-MIMO antenna system, but the UE in communication cannot satisfy QoS requirements only with the divided VR. More specifically, in step S1830, step S1831 and step S1832 may be performed.

Step S1831 may correspond to a case in which the VR of the UE in communication needs to be additionally allocated. In step S1831, the base station may request VR candidate information from the UE in communication. When the UE receives the request for VR candidate information from the base station, the UE may report, to the base station, VR candidate information stored by the UE in communication. The VR candidate information may be VR candidates acquired by the UE in communication in an initial access procedure. When the base station stores and manages VR candidate information for the UE in communication, step S1831 may not be performed.

Step S1832 may be performed after step S1831. In step S1832, the base station may additionally allocate antennas based on the VR candidates. At this time, the base station may additionally allocate antennas in order from a VR candidate having a high priority to a VR candidate having a low priority to identify a VR candidate satisfying QoS requirements. In addition, the base station may determine a VR to be allocated to the UE in communication by additionally allocating a VR candidate that satisfies QoS requirements.

Step S1840 may be performed when the VR used by the UE in communication is divided and allocated to each of the new UE and the UE in communication in the XL-MIMO antenna system, but the new UE cannot satisfy QoS requirements using only the divided VR.

In step S1841, the base station may additionally allocate antennas to the new UE through VR expansion. At this time, for VR expansion, the base station may first select antennas adjacent to the VR of the new UE that are not allocated to another UE. In addition, the base station may group the selected antennas into a plurality of candidate groups based on a preconfigured method, and may determine an order for evaluating the candidate groups to identify antennas to be added to the VR. Determination of antennas to be added to the VR may be based on QoS requirements of the new UE.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a base station, the method comprising:
acquiring location information of a second user equipment (UE) performing initial access;
selecting a first UE closest to the second UE among UEs in communication with the base station;
transmitting, to the second UE, a first reference signal (RS) via a first visibility region (VR) allocated to the first UE among a plurality of antennas;
receiving, from the second UE, a first report message including a measurement value for the first RS measured by the second UE; and
based on the first report message, determining that the second UE is able to use the first VR and that the first UE and the second UE are able to share the first VR through a multiplexing scheme, and allocating the first VR to the second UE.

2. The method of claim 1, wherein the multiplexing scheme is one of time division multiplexing, frequency division multiplexing, or code division multiplexing.

3. The method of claim 1, wherein based on a reference signal received power (RSRP) value of the first RS measured by the second UE being equal to or greater than a preset threshold, the second UE is determined to be able to use the first VR.

4. The method of claim 1, further comprising: based on the first UE and the second UE not being able to share the first VR through a multiplexing scheme,
dividing the first VR into a first-1 VR and a first-2 VR based on a first quality of service (QoS) requirement of the first UE and a second QoS requirement of the second UE;
allocating the first-1 VR to the first UE; and
allocating the first-2 VR to the second UE.

5. The method of claim 4, wherein each of the first QoS requirement and the second QoS requirement includes at least one of a priority level, a packet delay budget, a packet error rate, a maximum data burst volume, or a data rate requirement.

6. The method of claim 4, wherein the base station obtains the first QoS requirement and the second QoS requirement from a core network.

7. The method of claim 4, wherein the base station obtains the first QoS requirement from the first UE, and obtains the second QoS requirement from the second UE.

8. The method of claim 4, further comprising:
transmitting, to the first UE, a second RS via the first-1 VR;
receiving, from the first UE, a second report message including a measurement value for the second RS measured by the first UE;
checking, based on the second report message, whether the first-1 VR satisfies the first QoS requirement of the first UE; and
based on the first-1 VR satisfying the first QoS requirement of the first UE, determining the first-1 VR as a VR of the first UE.

9. The method of claim 8, further comprising: based on the first-1 VR not satisfying the first QoS requirement of the first UE,
requesting information on VR candidates of the first UE;
selecting, based on the VR candidates of the first UE, a second VR to be added to the first-1 VR;
transmitting, to the first UE, a third RS via the first-1 VR and the second VR;
receiving, from the first UE, a third report message including a measurement value for the third RS measured by the first UE; and
based on the measurement value for the third RS included in the third report message satisfying the first QoS requirement of the first UE, determining the first-1 VR and the second VR as a VR of the first UE.

10. The method of claim 4, further comprising:
transmitting, to the second UE, a fourth RS via the first-2 VR;
receiving, from the second UE, a fourth report message including a measurement value for the fourth RS measured by the second UE;
checking, based on the measurement value for the fourth RS included in the fourth report message, whether the first-2 VR satisfies the second QoS requirement of the second UE; and
based on the first-2 VR satisfying the second QoS requirement of the second UE, determining the first-2 VR as a VR of the second UE.

11. The method of claim 10, further comprising: based on the first-2 VR not satisfying the second QoS requirement of the second UE,
determining a first antenna region, among antennas adjacent to the first-2 VR, that is not allocated to another UE;
selecting a first antenna group including a preset number of antennas among antennas in the first antenna region;
transmitting, to the second UE, a fifth RS through antennas included in the first-2 VR and antennas of the first antenna group;
receiving, from the second UE, a fifth report message including a measurement value for the fifth RS measured by the second UE; and
based on the measurement value for the fifth RS included in the fifth report message satisfying the second QoS requirement of the second UE, determining the first-2 VR and the first antenna group as a VR of the second UE.

12. A base station comprising at least one processor, wherein the at least one processor causes the base station to:
acquire location information of a second user equipment (UE) performing initial access;
select a first UE closest to the second UE among UEs in communication with the base station;
transmit, to the second UE, a first reference signal (RS) via a first visibility region (VR) allocated to the first UE among a plurality of antennas;
receive, from the second UE, a first report message including a measurement value for the first RS measured by the second UE; and
based on the first report message, determine that the second UE is able to use the first VR and that the first UE and the second UE are able to share the first VR through a multiplexing scheme, and allocate the first VR to the second UE.

13. The base station of claim 12, wherein the multiplexing scheme is one of time division multiplexing, frequency division multiplexing, or code division multiplexing.

14. The base station of claim 12, wherein based on a reference signal received power (RSRP) value of the first RS measured by the second UE being equal to or greater than a preset threshold, the second UE is determined to be able to use the first VR.

15. The base station of claim 12, wherein the at least one processor further causes the base station to: based on the first UE and the second UE not being able to share the first VR through a multiplexing scheme,
divide the first VR into a first-1 VR and a first-2 VR based on a first quality of service (QoS) requirement of the first UE and a second QoS requirement of the second UE;
allocate the first-1 VR to the first UE; and
allocate the first-2 VR to the second UE.

16. A method of a second user equipment (UE), the method comprising:
transmitting location related information of the second UE to a base station during initial access to the base station;
receiving a measurement report control message including configuration information of a first reference signal (RS) and report configuration information;
receiving the first RS from the base station via a first visibility region (VR) allocated to a first UE;
measuring a first reference signal received power (RSRP) for the first RS;
transmitting, to the base station, a first report message including the measured first RSRP; and
based on receiving first VR allocation information from the base station, transmitting and receiving signals with the base station based on the first VR allocation information.

17. The method of claim 16, wherein based on the first VR allocation information indicating the first VR, the first VR allocation information includes information indicating a multiplexing scheme for sharing the first VR between the first UE and the second UE.

18. The method of claim 17, wherein the multiplexing scheme is one of time division multiplexing, frequency division multiplexing, or code division multiplexing.

19. The method of claim 16, further comprising: based on the first VR allocation information indicating a first-2 VR different from the first VR, receiving, from the base station, a second RS via the first-2 VR;
measuring a second RSRP for the second RS;
transmitting, to the base station, a second report message including the measured second RSRP; and
receiving second VR allocation information from the base station.

20. The method of claim 19, further comprising: based on the second VR allocation information indicating allocation of additional antennas to the first-2 VR, receiving a third RS from the base station;
measuring a third RSRP for the third RS;
transmitting, to the base station, a third report message including the measured third RSRP; and
receiving third VR allocation information from the base station.
